# EUROPEAN PATENT APPLICATION

(11) **EP 4 173 822 A1**
(43) Date of publication of application: **03.05.2023**
(21) Application number: 21829021.1
(22) Date of filing: 24.06.2021
(51) Int. Cl.: B32B 27/28, B32B 27/30, B32B 27/32, B65D 65/40

(54) **MULTI-LAYER FILM, AND MULTI-LAYER STRUCTURE IN WHICH SAME IS USED**

(30) Priority: 25.06.2020 JP 2020109761
(71) Applicant: Kuraray Co., Ltd., Kurashiki-shi, Okayama 710-0801 (JP)
(72) Inventor: KITAMURA, Masahiro, B9120 Melsele (BE); YOSHIDA, Kentaro, Kurashiki-shi, Okayama 713-8550 (JP); LUYTEN, Wout, B9120 Melsele (BE)
(74) Representative: Müller-Boré & Partner Patentanwälte PartG mbB
(86) International application number: PCT/JP2021/023968
(87) International publication number: WO 2021/261560

(57) **Abstract**

There is provided a multilayer film having a structure in which a layer (X) is an outermost layer and at least the layer (X), a layer (Y), and a layer (Z) are adjacently laminated in sequence, wherein the layer (X) is made of a resin composition (A) comprising a vinyl alcohol polymer (a) having a melting point of lower than 150 °C as a main component; the layer (Y) comprises an adhesive resin (B) having a melting point of lower than 150 °C as a main component; the layer (Z) comprises a polyolefin resin (C) having a melting point of lower than 150 °C as a main component; and the resin composition (A) comprises alkali metal ions (b) in 25 to 1500 ppm. Such a multilayer film is suitably used as a gas barrier film because it has excellent appearance and interlayer adhesiveness even while having a vinyl alcohol polymer as an outermost layer.

## Description

### TECHNICAL FIELD

The present invention relates to a multilayer film comprising an outermost layer made of a vinyl alcohol polymer having a melting point of less than 150 °C and a multilayer structure therewith, and a method for recovering the multilayer structure and a recovered composition containing a recovered material of the multilayer structure.

### BACKGROUND ART

Packaging materials for long-term storage of foods are often required to have gas barrier ability such as oxygen barrier ability. Oxidation degradation of foods by oxygen ingress and propagation of microorganisms can be suppressed by using a packaging material having higher gas barrier ability. Metal foil such as aluminum foil and inorganic vapor deposition layers including silicon oxide and aluminum oxide have been extensively used as a layer which improves gas barrier property. Meanwhile, resin layers such as a vinyl alcohol polymer and a polyvinylidene chloride having gas barrier property have been extensively used. A vinyl alcohol polymer is characterized in that it is crystallized and densified by hydrogen bonding between hydroxy groups in the molecule, exhibiting gas barrier property. In particular, an ethylene-vinyl alcohol copolymer (hereinafter, sometimes abbreviated as "EVOH") exhibits excellent thermal stability, so that it is suitable for melt molding. Thus, as co-extrusion technique has been developed, a multilayer film having an EVOH layer as an intermediate layer has been extensively used as a packaging material having gas barrier property (Patent Reference No. 1).

In recent years, demand for so-called post-consumer recycling (hereinafter, sometimes simply abbreviated as "recycling") in which packaging materials consumed in the market are recovered and recycled, has been globally increased due to environmental problems and waste problems. Recycling is generally conducted by a process comprising cutting a recovered packaging material and, after, if necessary, sorting and washing, melt-mixing it using an extruder.

### PRIOR ART REFERENCES

### PATENT REFERENCES

Patent Reference No. 1: WO 2020/071513

### SUMMARY OF THE INVENTION

### PROBLEMS TO BE SOLVED BY THE INVENTION

However, seeking for diversity in a layer structure and synergy in improvement of barrier property by lamination with an inorganic vapor deposition layer, an EVOH layer has been increasingly used as an outermost layer of a multilayer film. In such a case, in multilayer melt molding, the EVOH layer is in direct contact with a die wall and the EVOH layer discharged from the die is rapidly cooled. Thus, there may be problems of defective appearance due to thickness irregularity and interlayer peeling due to poor interlayer adhesiveness. When a multilayer film is uniaxially or biaxially stretched expecting improvement in, for example, mechanical properties, such problems of defective appearance and interlayer peeling may be further prominent, which need improvement.

Reflecting such a situation, a first objective of the present invention is to provide a multilayer film having a vinyl alcohol polymer as an outermost layer, which is excellent in appearance and interlayer adhesiveness. A second objective of the present invention is to provide a multilayer structure satisfying both gas barrier property and recyclability prepared using the multilayer film, and a packaging material comprising the multilayer structure, a recovered composition comprising a recovered material of the multilayer structure and a recovering method therefor.

### MEANS FOR SOLVING THE PROBLEMS

We have intensely investigated various combination of a resin composition and processing conditions, and have finally found that when a vinyl alcohol polymer having a certain amount of metal and melting point is used for an outermost layer, a multilayer film excellent in appearance and interlayer adhesiveness can be obtained. We have also found that, by specifying materials used for the multilayer film and other layers laminated therewith and a laminate structure thereof, a multilayer structure satisfying both gas barrier property and recyclability can be provided, and thus have achieved the present invention. Specifically, the above problems can be solved by providing the followings.
[1] A multilayer film having a structure in which a layer (X) is an outermost layer and at least the layer (X), a layer (Y), and a layer (Z) are adjacently laminated in sequence, wherein the layer (X) is made of a resin composition (A) comprising a vinyl alcohol polymer (a) having a melting point of lower than 150 °C as a main component; the layer (Y) comprises an adhesive resin (B) having a melting point of lower than 150 °C as a main component; the layer (Z) comprises a polyolefin resin (C) having a melting point of lower than 150 °C as a main component; and the resin composition (A) comprises alkali metal ions (b) in 25 to 1500 ppm.
[2] The multilayer film according to [1], wherein the vinyl alcohol polymer (a) is an ethylene-vinyl alcohol copolymer with an ethylene unit content of 15 to 85 mol%.
[3] The multilayer film according to [1] or [2], wherein the vinyl alcohol polymer (a) has a modifying group comprising a primary hydroxy group represented by general formula (I): 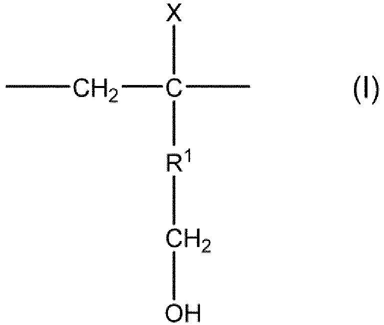 wherein X represents a hydrogen atom, a methyl group or a group represented by R²-OH; R¹ and R² represent independently of each other a single bond, an alkylene group having 1 to 9 carbon atoms or an alkyleneoxy group having 1 to 9 carbon atoms; the alkylene group and the alkyleneoxy group can contain a hydroxy group, an alkoxy group or a halogen atom.
[4] The multilayer film according to [3], wherein in general formula (I), R¹ is a single bond, and X is a hydroxymethyl group.
[5] The multilayer film according to [3], wherein in general formula (I), R¹ is a hydroxymethylene, and X is a hydrogen atom.
[6] The multilayer film according to [3], wherein in general formula (I), R¹ is a methylmethyleneoxy group, and X is a hydrogen atom.
[7] The multilayer film according to any one of [3] to [6], wherein in the vinyl alcohol polymer (a), a content of the modifying group containing a primary hydroxy group is 2 mol% or more and less than 20 mol%.
[8] The multilayer film according to any one of [1] to [7], wherein the resin composition (A) comprises a vinyl alcohol polymer (a') having a melting point of 150 °C or higher in less than 50 mass%.
[9] The multilayer film according to any one of [1] to [8], wherein the resin composition (A) comprises at least one type of multivalent metal ions (c) selected from the group consisting of magnesium ions, calcium ions and zinc ions in 10 to 300 ppm.
[10] The multilayer film according to any one of [1] to [9], wherein the resin composition (A) comprises a higher aliphatic carboxylic acid (d) having 8 to 30 carbon atoms in 100 to 4000 ppm.
[11] The multilayer film according to any one of [1] to [10], wherein the polyolefin resin (C) comprises a polyethylene resin as a main component.
[12] The multilayer film according to any one of [1] to [11], wherein a thickness of the layer (X) is 0.2 µm or more and less than 20 µm, and a ratio of a thickness of the layer (X) to the total thickness of all layers of the multilayer film is less than 25 %.
[13] The multilayer film according to any one of [1] to [12], wherein the multilayer film is stretched at least uniaxially by 3 times or more and less than 12 times.
[14] The multilayer film according to any one of [1] to [13], wherein the multilayer film is stretched biaxially 3 times or more and less than 12 times in a respective direction.
[15] A vapor deposition multilayer film, comprising the multilayer film according to any one of [1] to [14] having an inorganic vapor deposition layer (I) on an exposed surface side of the layer (X).
[16] The multilayer film or the vapor deposition multilayer film according to any one of [1] to [15], wherein an oxygen transmission rate (under the conditions of 20 °C and 65 %RH) as determined in accordance with the method described in JIS K 7126-2 (equal-pressure method; 2006) is less than 60 cc/(m²•day•atm).
[17] The multilayer film or the vapor deposition multilayer film according to any one of [1] to [16], wherein a light transmittance at a wavelength of 600 nm is 80 % or more.
[18] A multilayer structure, which is a laminate of the multilayer film or the vapor deposition multilayer film according to any one of [1] to [17], and at least one resin layer (R) comprising a thermoplastic resin (D) as a main component.
[19] The multilayer structure according to [18], wherein the thermoplastic resin (D) comprises a polyolefin resin having a melting point of lower than 150 °C as a main component.
[20] The multilayer structure according to [18] or [19], wherein both polyolefin resin (C) and thermoplastic resin (D) comprise a polyethylene resin as a main component.
[21] The multilayer structure according to any one of [18] to [20], wherein at least one of the layer (Z) and the resin layer (R) comprises a polyethylene resin as a main component, and a ratio of the total thickness of a layer or layers comprising a polyethylene resin as a main component to the total thickness of the multilayer structure is 0.75 or more.
[22] The multilayer structure according to any one of [18] to [21], wherein a layer comprising a resin having a melting point of 240 °C or higher as a main component and a metal layer with a thickness of 1 µm or more are absent.
[23] A packaging material comprising the multilayer structure according to any one of [18] to [22].
[24] A recovered composition comprising a recovered material of the multilayer structure according to any one of [18] to [22].
[25] A method for recovering a multilayer structure comprising crushing the multilayer structure according to any one of [18] to [22] and then melt-molding the crushed material.

### EFFECTS OF THE INVENTION

A multilayer film of the present invention exhibits excellent appearance and interlayer adhesiveness while having a vinyl alcohol polymer as an outermost layer, so that it can be suitably used as a gas barrier film. Furthermore, a multilayer structure of the present invention comprising the multilayer film exhibits excellent appearance and is suitably used as a packaging material which satisfies both gas barrier property and recyclability. Since the multilayer structure is excellent in recyclability, there can be provided a recovered composition comprising a recovered material of the multilayer structure and a recovering method therefor. The term, "interlayer adhesiveness" as used herein means adhesiveness of a layer (X) to a layer adjacent to the layer (X), specifically adhesiveness to a layer (Y) as described later. An interlayer adhesiveness can be evaluated by T-type peel strength as described in Examples. The term, "recyclability" means that when a multilayer structure or recovered material of a packaging material of the present invention is melt-kneaded to prepare a recovered composition, coloration or gelation of a resin is prevented and thus a recovered composition exhibiting excellent appearance and mechanical properties can be efficiently prepared, which can be evaluated a recovering test as described in Examples.

### MODES FOR CARRYING OUT THE INVENTION

There will be described embodiments of the present invention. In the following description, specific materials (compounds and the like), which exhibit a particular function may be exemplified, but the present invention is not limited to an aspect using such a material. Furthermore, unless otherwise specified, the exemplified materials can be used alone or in combination.

A multilayer film of the present invention has a structure in which a layer (X) is an outermost layer and at least the layer (X), a layer (Y), and a layer (Z) are adjacently laminated in sequence, wherein the layer (X) is made of a resin composition (A) (hereinafter, sometimes referred to as "resin composition (A)") comprising a vinyl alcohol polymer (a) (hereinafter, sometimes referred to as "vinyl alcohol polymer (a)") having a melting point of lower than 150 °C as a main component; the layer (Y) comprises an adhesive resin (B) (hereinafter, sometimes referred to as "adhesive resin (B)") having a melting point of lower than 150 °C as a main component; the layer (Z) comprises a polyolefin resin (C) (hereinafter, sometimes referred to as "polyolefin resin (C)") having a melting point of lower than 150 °C as a main component; and the resin composition (A) comprises alkali metal ions (b) in 25 to 1500 ppm. Here, the phrase "the layer (X), a layer (Y), and a layer (Z) are adjacently laminated in sequence" means that, adjacent layers are directly laminated; specifically, the layer (X), the layer (Y) and the layer (Z) are sequentially laminated, and the layer (X) and the layer (Y) are directly laminated while the layer (Y) and the layer (Z) are directly laminated. Here, "main component" means a component contained in more than 50 mass%.

### <Resin composition (A)>

A multilayer film of the present invention contains a vinyl alcohol polymer (a) having a melting point of lower than 150 °C as a main component, and has a layer (X) made of a resin composition (A) containing alkali metal ions (b) in 25 to 1500 ppm as an outermost layer. The resin composition (A) can contain, in addition to the above components, a vinyl alcohol polymer (a') having a melting point of 150 °C or higher; at least one type of multivalent metal ions (c) selected from the group consisting of magnesium ions, calcium ions and zinc ions; a higher aliphatic carboxylic acid (d) having 8 to 30 carbon atoms; and other components described later. These will be detailed below.

### <Vinyl alcohol polymer (a)>

With a melting point of a vinyl alcohol polymer (a) being lower than 150 °C, appearance and interlayer adhesiveness of a multilayer film having a layer (X) comprising a vinyl alcohol polymer (a) as a main component as an outermost layer can be improved. That is probably because with a melting point of the vinyl alcohol polymer (a) being lower than 150 °C, fluidity of a polymer chain is so improved that a stress can be effectively relaxed even at a relatively lower temperature during melt molding and secondary processing such as stretching, and adhesion reaction activity to an adjacent layer can be maintained.

A vinyl alcohol polymer (a) can be generally produced by saponifying a vinyl ester polymer. Production and saponification of a vinyl ester polymer can be conducted by a known method.

In the light of improving gas barrier property, a vinyl alcohol unit content of the vinyl alcohol polymer (a) is preferably 15 mol% or more, more preferably 30 mol% or more, further preferably 40 mol% or more, and can be 50 mol% or more. A vinyl alcohol unit content of the vinyl alcohol polymer (a) is preferably 85 mol% or less, more preferably 80 mol% or less, particularly preferably 75 mol% or less. Furthermore, in the light of more prominent effects of the present invention, a melting point of the vinyl alcohol polymer (a) is preferably lower than 140 °C, more preferably lower than 130 °C, and can be lower than 120 °C or lower than 110 °C. In the light of processability during secondary processing such as melt molding and stretching and in the light of heat resistance as a packaging material, a melting point of the vinyl alcohol polymer (a) is preferably 80 °C or higher, more preferably 90 °C or higher, further preferably 100 °C or higher. A melting point of the vinyl alcohol polymer (a) can be controlled by the followings alone or in combination of two or more.
(1) Changing an ethylene unit content (as an ethylene unit content is increased, a melting point is lowered)
(2) Changing a saponification degree (as a saponification degree is reduced, a melting point is lowered)
(3) Introducing a modifying group containing a primary hydroxy group (introduction of a modifying group containing a primary hydroxy group allows for lowering a melting point)

As described above, as an ethylene unit content of the vinyl alcohol polymer (a)is increased, a melting point is lowered and water resistance, thermal stability, melt moldability, and secondary processability can be improved. If an ethylene unit content of the vinyl alcohol polymer (a) is too high, gas barrier property may be insufficient or interlayer adhesiveness to a layer (Y) or an inorganic vapor deposition layer (I) described later may be reduced. In this light, an ethylene unit content of the vinyl alcohol polymer (a) is preferably 15 mol% or more, more preferably 20 mol% or more, further preferably 25 mol% or more. An ethylene unit content of the vinyl alcohol polymer (a) is preferably 85 mol% or less, more preferably 75 mol% or less, further preferably 60 mol% or less. An ethylene unit content of the vinyl alcohol polymer (a) can be determined by NMR spectrometry. The vinyl alcohol polymer (a) can be made of two or more vinyl alcohol polymer with a different ethylene unit content. An ethylene unit content can be controlled by various methods, such as a pressure of ethylene supplied to a polymerization process and a ratio of a vinyl ester to a solvent.

As described above, a melting point can be lowered by reducing a saponification degree of the vinyl alcohol polymer (a). If a saponification degree is too low, gas barrier property and thermal stability are insufficient, and interlayer adhesiveness to a layer (Y) or inorganic vapor deposition layer (I) described later may be reduced. In this light, a saponification degree of the vinyl alcohol polymer (a) is preferably 60 mol% or more, more preferably 70 mol% or more, further preferably 80 mol% or more. The upper limit of a saponification degree is 100 mol%, but in the light of material balance and energy balance in a production process, the upper limit is preferably 99.99 mol%. Here, a saponification degree denotes a proportion of the number of alcohol units to the total number of alcohol units and ester units in the vinyl alcohol polymer (a). A saponification degree of the vinyl alcohol polymer (a) is determined by NMR spectrometry. The vinyl alcohol polymer (a) can be made of two or more vinyl alcohol polymers with a different saponification degree. A saponification degree can be controlled by various methods; specifically, it can be controlled by, for example, the amount of an alkali catalyst, a water content, a reaction temperature, a reaction time and the like in a saponification process. Furthermore, it can be controlled by esterizing a hydroxy group generated by a saponification process with a carboxylic acid such as acetic acid or an anhydride thereof in a post-saponification process.

As described above, a melting point of the vinyl alcohol polymer (a) can be lowered by introducing a modifying group containing a primary hydroxy group represented by general formula (I). A reduction degree of a melting point per an introduction rate depends on a structure of the modifying group containing a primary hydroxy group introduced, and a melting point is generally lowered by about 6 to 9 °C by introducing 1 mol% of a modifying group containing a primary hydroxy group represented by general formula (I). When a melting point is controlled by this method, a melting point can be lowered while relatively maintaining gas barrier property and thermal stability, and furthermore, reduction of interlayer adhesiveness to a layer (Y) or inorganic vapor deposition layer (I) described later is prevented, so that a multilayer film exhibiting particularly excellent quality and performance can be provided. That is probably because a melting point can be lowered while maintaining the amount of a hydroxy group, and a primary hydroxy group is highly active for adhesion reaction with a layer (Y) or inorganic vapor deposition layer (I) described later. A content of a modifying group containing a primary hydroxy group of the vinyl alcohol polymer (a) can be appropriately adjusted, taking a melting point and balance between various physical properties into consideration, and when it is 2 mol% or more and less than 20 mol%, physical properties are often well-balanced. The lower limit of a content of a modifying group containing a primary hydroxy group of the vinyl alcohol polymer (a) is more preferably 4 mol%, further preferably 6 mol%. The upper limit of a content of a modifying group containing a primary hydroxy group of the vinyl alcohol polymer (a) is more preferably 15 mol%, further preferably 10 mol%. A modifying group containing a primary hydroxy group can be introduced by copolymerization or a polymeric reaction. 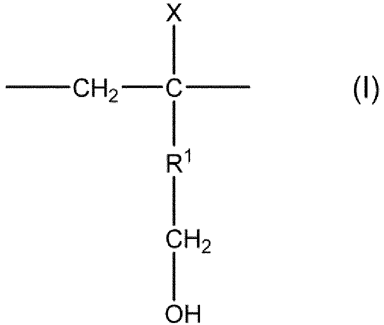 wherein X represents a hydrogen atom, a methyl group or a group represented by R²-OH; R¹ and R² represent independently of each other a single bond, an alkylene group having 1 to 9 carbon atoms or an alkyleneoxy group having 1 to 9 carbon atoms; and the alkylene group and the alkyleneoxy group can contain a hydroxy group, an alkoxy group or a halogen atom.

In general formula (I), X is preferably a hydrogen atom or a group represented by R²-OH, more preferably a group represented by R²-OH. R¹ and R² are preferably a single bond, an alkylene group having 1 to 5 carbon atoms or an alkyleneoxy group having 1 to 5 carbon atoms, more preferably a single bond, an alkylene group having 1 to 3 carbon atoms or an alkyleneoxy group having 1 to 3 carbon atoms. However, the an alkylene group and the an alkyleneoxy group can contain a hydroxy group, an alkoxy group or a halogen atom.

A specific example of a modifying group (structure) containing a primary hydroxy group represented by general formula (I) is, for example, a structural unit represented by general formula (II).

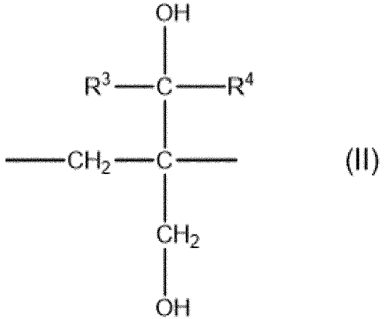

In general formula (II), R³ and R⁴ represent independently of each other a hydrogen atom or an alkyl group having 1 to 8 carbon atoms, and the alkyl group can contain a hydroxy group, an alkoxy group or a halogen atom. In an aspect of the present invention, it is preferable that in general formula (I), R¹ is a single bond and X is a hydroxymethyl group (in general formula (II), R³ and R⁴ are a hydrogen atom). In a vinyl alcohol polymer (a) having the modifying group containing a primary hydroxy group, a melting point can be lowered while maintaining particularly excellent gas barrier property and thermal stability, and reduction of interlayer adhesiveness to a layer (Y) or inorganic vapor deposition layer (I) described later can be prominently prevented.

Another specific example of a modifying group (structure) containing a primary hydroxy group represented by general formula (I) is, for example, a structural unit represented by general formula (III).

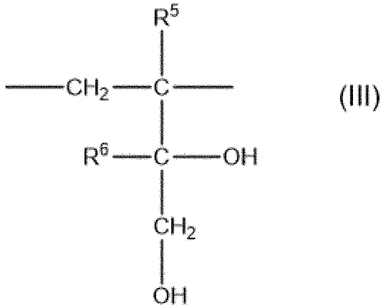

In general formula (III), R⁵ is as defined for X in formula (I). R⁶ represents a hydrogen atom or an alkyl group having 1 to 8 carbon atoms, and the an alkyl group can contain a hydroxy group, an alkoxy group or a halogen atom. In another aspect of the present invention, it is preferable that in general formula (I), R¹ is hydroxymethylene and X is a hydrogen atom (in general formula (III), R⁵ and R⁶ are a hydrogen atom). In a vinyl alcohol polymer (a) having the modifying group containing a primary hydroxy group, a melting point can be lowered while maintaining relatively excellent gas barrier property and thermal stability, and reduction of interlayer adhesiveness to a layer (Y) or inorganic vapor deposition layer (I) described later can be relatively prevented.

Another specific example of a modifying group (structure) containing a primary hydroxy group represented by general formula (I) is, for example, a structural unit represented by general formula (IV).

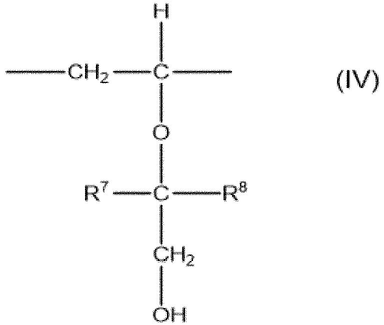

In general formula (IV), R⁷ and R⁸ represent independently of each other a hydrogen atom, an alkyl group having 1 to 8 carbon atoms, an cycloalkyl group having 3 to 8 carbon atoms, or a hydroxy group. Some or all of hydrogen atoms in the alkyl group and the cycloalkyl group can be replaced with a hydroxy group, an alkoxy group or a halogen atom. In a further alternative aspect of the present invention, it is preferable that in structural formula (I), R¹ is a methylmethyleneoxy group, and X is a hydrogen atom (in general formula (IV), one of R⁷ and R⁸ is a hydrogen atom, and the other is a methyl group). In a vinyl alcohol polymer (a) having the modifying group containing a primary hydroxy group, a melting point can be lowered while maintaining more excellent gas barrier property and thermal stability, and reduction of interlayer adhesiveness to a layer (Y) or inorganic vapor deposition layer (I) described later can be more prevented.

Without impairing the effects of the present disclosure, the vinyl alcohol polymer (a) can contain other monomer units besides an ethylene unit, a vinyl ester unit, a vinyl alcohol unit and the modifying group containing a primary hydroxy group. A content of the other monomer units is preferably 5 mass% or less, more preferably 3 mass% or less, further preferably 1 mass% or less, particularly preferably substantially absent. Examples of the other monomers include α-olefins such as propylene, n-butene, isobutylene, and 1-hexene; acrylic acid and salts thereof; unsaturated monomers having an acrylic acid ester group; methacrylic acid and salts thereof; unsaturated monomers having a methacrylic acid ester group; acrylamide, N-methylacrylamide, N-ethylacrylamide, N,N-dimethylacrylamide, diacetoneacrylamide, acrylamidopropanesulfonic acid and salts thereof, acrylamidopropyldimethylamine and salts thereof (for example, quaternary salts); methacrylamide, N-methylmethacrylamide, N-ethylmethacrylamide, methacrylamidopropanesulfonic acid and salts thereof, methacrylamidopropyldimethylamide and salts thereof (for example, quaternary salts); vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether, and 2,3-diacetoxy-1-vinyloxypropane; vinyl cyanides such as acrylonitrile and methacrylonitrile; vinyl halides such as vinyl chloride and vinyl fluoride; vinylidene halides such as vinylidene chloride and vinylidene fluoride; allyl compounds such as allyl acetate, 2,3-diacetoxy-1-allyloxypropane and allyl chloride; unsaturated dicarboxylic acids such as maleic acid, itaconic acid and fumaric acid, and salts or esters thereof; vinylsilane compounds such as vinyltrimethoxysilane; and isopropenyl acetate.

### (Vinyl alcohol polymer (a'))

The resin composition (A) can contain a vinyl alcohol polymer (a') with a melting point of 150 °C or higher in less than 50 mass%. Except that a melting point is controlled higher, the conditions described for a vinyl alcohol polymer (a) can be also applied to a vinyl alcohol polymer (a'), as they are. A vinyl alcohol polymer (a') is preferably an ethylene-vinyl alcohol copolymer with an ethylene unit content of 15 to 60 mol% and a saponification degree of 90 mol% or more. The lower limit of an ethylene unit content is more preferably 20 mol%, further preferably 23 mol%. The upper limit of an ethylene unit content is more preferably 55 mol%, further preferably 50 mol%. The lower limit of a saponification degree is preferably 95 mol%, more preferably 99 mol%. The upper limit of a saponification degree is preferably 100 mol%, more preferably 99.99 mol%. In the light of cost reduction, the lower limit of a content of the vinyl alcohol polymer (a') is preferably 5 mass%, more preferably 20 mass%, further preferably 35 mass%. Meanwhile, in the light of more prominent effects of the present invention, the less a content of the vinyl alcohol polymer (a') with a melting point of 150 °C or higher is, the better, and the upper limit is less than 50 mass%, but more preferably, it is substantially absent. As the vinyl alcohol polymer (a'), various brands of "EVAL^{™} resin" from Kuraray Co., Ltd. can be preferably used.

### <Alkali metal ions (b)>

A resin composition (A) contains alkali metal ions (b) in 25 to 1500 ppm. With alkali metal ions (b) being contained in a resin composition (A) within the range, interlayer adhesiveness to a layer (Y) described later tends to be improved. Without being clearly understood, interlayer adhesiveness would be prominently improved in comparison with the case in which alkali metal ions (b) are contained in a vinyl alcohol polymer with a higher melting point probably because with a melting point of a vinyl alcohol polymer (a) as a main component of a resin composition (A) being lower than 150 °C, fluidity of a polymer chain is improved so that adhesion reaction activity to an adjacent layer is maintained. If the amount of the alkali metal ions (b) is too low, the resin composition (A) may tend to be thickened during melt molding, leading to defective appearance such as gel and hard spots, or reduced interlayer adhesiveness to a layer (Y) described later. Meanwhile, if the amount of alkali metal ions (b) is too high, the resin composition (A) may be excessively decomposed during melt molding and significant level of coloration may occur. In this light, the lower limit of a content of the alkali metal ions (b) is preferably 50 ppm, more preferably 70 ppm, further preferably 90 ppm. The upper limit of a content of the alkali metal ions (b) is preferably 1000 ppm, more preferably 750 ppm, further preferably 500 ppm. Furthermore, a content ratio of the alkali metal ions (b) to a carboxylic acid described later can be controlled to further improve melt moldability and coloration resistance of a resin composition (A) obtained.

Examples of alkali metal ions (b) include lithium, sodium, potassium, rubidium and cesium ions, and in the light of industrial availability, sodium or potassium ions are preferable. In particular, by using potassium ions, both hue of a resin composition (A) and interlayer adhesiveness to a layer (Y) described later can be satisfied in a higher level. These can be used alone or in combination of two or more.

Examples of an alkali metal compound giving alkali metal ions (b) include aliphatic carboxylic acid salts, aromatic carboxylic acid salts, carbonic acid salts, hydrochloric acid salts, nitric acid salts, sulfuric acid salts, phosphoric acid salts, hydroxides and metal complexes of an alkali metal such as lithium, sodium and potassium. Among these, aliphatic carboxylic acid salts and phosphoric acid salts are more preferable in the light of availability and handleability. Preferable aliphatic carboxylic acid salts include acetates, caprylates and stearates.

### <Multivalent metal ions (c)>

A resin composition (A) preferably contains at least one type of multivalent metal ions (c) selected from the group consisting of magnesium ions, calcium ions and zinc ions in 10 to 300 ppm. Multivalent metal ions (c) contained in 10 ppm or more tend to prevent thickening of the resin composition (A) in a melt molding and defective appearance such as occurrence of gel or hard spots. Meanwhile, multivalent metal ions (c) contained in 300 ppm or less tend to prevent excessive decomposition of the resin composition (A) during melt molding and coloration. Furthermore, when a multilayer structure of the present invention is recycled, during melt molding of a ground product of a multilayer structure, a crosslinking reaction of the resin proceeds to induce thickening or gelation, but multivalent metal ions (c) contained in a certain amount prevent thickening, gelation and adhesion of the resin to a screw. In this light, a content of multivalent metal ions (c) is preferably 20 to 260 ppm, more preferably 30 to 220 ppm. Among these, a resin composition (A) preferably contains magnesium ions or calcium ions as multivalent metal ions (c), more preferably calcium ions. Furthermore, by controlling a content ratio of multivalent metal ions (c) to a carboxylic acid described later, melt moldability and coloration resistance of a resin composition (A) obtained can be further improved.

Examples of a multivalent metal compound giving multivalent metal ions (c) include aliphatic carboxylic acid salts, aromatic carboxylic acid salts, carbonic acid salts, hydrochloric acid salts, nitric acid salts, sulfuric acid salts, phosphoric acid salts, hydroxides and metal complexes of magnesium, calcium and zinc. Among these, aliphatic carboxylic acid salts and hydroxides are more preferable in the light of availability and handleability. Preferable aliphatic carboxylic acid salts include acetates, caprylates and stearates.

### <Higher aliphatic carboxylic acid (d)>

A resin composition (A) preferably contains a higher aliphatic carboxylic acid (d) having 8 to 30 carbon atoms in 100 to 4000 ppm. All or a part of the higher aliphatic carboxylic acid (d) can be present as a salt, and can be present as a salt of an alkali metal ion (b) or multivalent metal ion (c). The higher aliphatic carboxylic acid (d) is preferably caprylic acid or stearic acid. A multilayer film of the present invention has a layer (X) made of a resin composition (A) as an outermost layer, and in a die, a higher aliphatic carboxylic acid (d) would act as a lubricant to a metal surface of the die, so that defective appearance due to thickness irregularity of a multilayer film or formation of gels or hard spots due to a residual resin could be prevented. Thus, the resin composition (A) preferably contains a higher aliphatic carboxylic acid (d) in 100 ppm or more. Meanwhile, when a content of the higher aliphatic carboxylic acid (d) is 4000 ppm or less, thickening of the resin composition (A) in a melt molding tends to be prevented and interlayer adhesiveness to a layer (Y) described later tends to be maintained. From these points, a content of the higher aliphatic carboxylic acid (d) is more preferably 200 to 3000 ppm, further preferably 300 to 2500 ppm.

A resin composition (A) can contain other components other than a vinyl alcohol polymer (a), a vinyl alcohol polymer (a'), alkali metal ions (b), multivalent metal ions (c) and a higher aliphatic carboxylic acid (d) as long as the effects of the present invention are not impaired. Examples of other components include alkaline earth metal ions and transition metal ions other than multivalent metal ions (c), a carboxylic acid (a monocarboxylic acid, a polyvalent carboxylic acid) other than a higher aliphatic carboxylic acid (d), a thermoplastic resin other than a vinyl alcohol polymer (a) and a vinyl alcohol polymer (a'), a phosphoric acid compound, a boron compound, a pro-oxidant, an antioxidant (a hindered phenolic compound and the like), a plasticizer, a heat stabilizer (a melt stabilizer), a photo initiator, a deodorant, a UV absorber, an antistatic, a lubricant, a colorant, a filler, a desiccant, a pigment, a dye, a processing aid, a flame retardant and an antifogging agent. From the viewpoint that coloring during melt-molding a crushed multilayer structure containing a resin composition (A) can be suppressed, preferably a carboxylic acid and/or a phosphoric acid compound are contained. Furthermore, a boron compound contained allows for controlling a melt viscosity of a resin composition (A) and a crushed multilayer structure containing a resin composition (A).

### <Carboxylic acid>

A resin composition (A) preferably contains a carboxylic acid other than a higher aliphatic carboxylic acid (d). The lower limit of a content of the carboxylic acid is preferably 50 ppm, more preferably 100 ppm. The upper limit of a content of the carboxylic acid is preferably 400 ppm, more preferably 350 ppm. With a content of the carboxylic acid being 50 ppm or more, coloration resistance tends to be excellent. With a content of the carboxylic acid being 400 ppm or less, interlayer adhesiveness tends to be maintained and odor generation tends to be prevented.

A pKa of the carboxylic acid is preferably 3.5 to 5.5. With a pKa of the carboxylic acid being within the above range, for a resin composition (A) obtained, pH buffering ability is enhanced, and melt moldability and coloration by an acidic or basic substance are further improved.

The carboxylic acids can be a monovalent carboxylic acid. These can be used alone or in combination of two or more. A monovalent carboxylic acid denotes a compound having one carboxyl group in a molecule. Examples of a monovalent carboxylic acid with a pKa of 3.5 to 5.5 include, but not limited to, formic acid (pKa = 3.77), acetic acid (pKa = 4.76), propionic acid (pKa = 4.85), and acrylic acid (pKa = 4.25). These carboxylic acids can further have a substituent such as a hydroxy group, an amino group and a halogen atom. Among these, acetic acid is preferable because of higher safety, availability and handleability.

The carboxylic acid can be a multivalent carboxylic acid. When the carboxylic acid is a multivalent carboxylic acid, coloration resistance of a resin composition (A) at an elevated temperature, and coloration resistance of a melt-molded product of a crushed multilayer structure obtained may be further improved. The multivalent carboxylic acid compound also preferably has 3 or more carboxyl groups. In this case, coloration resistance can be further effectively improved. A multivalent carboxylic acid denotes a compound having two or more carboxyl group in a molecule. Here, a pKa of at least one carboxyl group is preferably in the range of 3.5 to 5.5; examples include oxalic acid (pKa2 = 4.27), succinic acid (pKa1 = 4.20), fumaric acid (pKa2 = 4.44), malic acid (pKa2 = 5.13), glutaric acid (pKa1 = 4.30, pKa2 = 5.40), adipic acid (pKa1 = 4.43, pKa2 = 5.41), pimeric acid (pKa1 = 4.71), phthalic acid (pKa2 = 5.41), isophthalic acid (pKa2 = 4.46), telephthalic acid (pKa1 = 3.51, pKa2 = 4.82), citric acid (pKa2 = 4.75), tartaric acid (pKa2 = 4.40), glutamic acid (pKa2 = 4.07), and aspartic acid (pKa = 3.90).

### <Phosphoric acid compound>

A resin composition (A) can further contain a phosphoric acid compound. The lower limit of a content of the phosphoric acid compound is preferably 5 ppm in terms of a phosphoric acid radical. The upper limit of a content of the phosphoric acid compound is preferably 100 ppm in terms of a phosphoric acid radical. With a content of the phosphoric acid compound being within the range, coloration of a resin composition (A) obtained and a melt-molded product of a crushed multilayer structure obtained can be prevented and thermal stability can be improved.

Examples of a phosphoric acid compound include various acids such as phosphoric acid and phosphorous acid, and salts thereof. A phosphate salt can be any of a monobasic phosphate salt, a dibasic phosphate salt and a tribasic phosphate salt. There are also no restrictions to a cationic species for a phosphate salt, and an alkali metal and an alkaline earth metal are preferable. Among these, a phosphoric acid compound is preferably sodium dihydrogen phosphate, potassium dihydrogen phosphate, disodium hydrogen phosphate or dipotassium hydrogen phosphate.

### <Boron compound>

A resin composition (A) can further contain a boron compound. When a boron compound is contained, the lower limit of its content in the resin composition (A) is preferably 50 ppm, more preferably 100 ppm in terms of a boron element. The upper limit of a content of a boron compound in the resin composition (A) is preferably 400 ppm, more preferably 200 ppm in terms of a boron element. With a boron compound being contained in this range, a resin composition (A) and a crushed multilayer structure obtained can exhibit improved thermal stability during melt molding, resulting in prevention of generation of gel and hard spots. Furthermore, draw-down resistance and neck-in resistance during film deposition can be improved, and mechanical properties of a molded article obtained may be improved. It is assumed that these effects are due to generation of chelate interaction between the vinyl alcohol polymer (a) and the boron.

Examples of a boron compound include boric acids, boric acid esters, boric acid salts and boron hydrides. Specific examples include boric acids such as orthoboric acid (H₃BO₃), metaboric acid and tetraboric acid; boric acid esters such as trimethyl borate and triethyl borate; and boric acid salts such as alkali metal salts or alkaline earth metal salts of the boric acids, and borax. Among these, orthoboric acid is preferable.

### <Hindered phenolic compound>

A resin composition (A) can further contain a hindered phenolic compound. When a hindered phenolic compound is contained, a content of the hindered phenolic compound in the resin composition (A) is preferably 1000 to 10000 ppm. When the content is 1000 ppm or more, coloration, thickening and gelation of a resin during melt molding a crushed multilayer structure can be prevented. A content of the hindered phenolic compound is more preferably 2000 ppm or more. When a content of the hindered phenolic compound is 10000 ppm or less, coloration or bleedout derived from the hindered phenolic compound can be prevented. A content of the hindered phenolic compound is more preferably 8000 ppm or less.

The hindered phenolic compound has at least one hindered phenol group. A hindered phenol group denotes a group in which a bulky substituent is bonded to at least one of the carbons adjacent to the carbon to which the hydroxyl group of the phenol is bonded. The bulky substituent is preferably an alkyl group having 1 to 10 carbon atoms, more preferably a t-butyl group.

The hindered phenolic compound is preferably in a solid state around room temperature. In the light of suppressing bleedout of the compound, a melting point or softening temperature of the hindered phenolic compound is preferably 50 °C or higher, more preferably 60 °C or higher, still more preferably 70 °C or higher. From the same viewpoint, a molecular weight of the hindered phenolic compound is preferably 200 or more, more preferably 400 or more, still more preferably 600 or more. On the other hand, the molecular weight is generally 2000 or less. Furthermore, in the light of facilitating mixing with a vinyl alcohol polymer (a), a melting point or softening temperature of the hindered phenolic compound is preferably 200 °C or lower, more preferably 190 °C or lower, still more preferably 180 °C or lower.

The hindered phenolic compound preferably has an ester bond or an amide bond. Examples of a hindered phenol compound having an ester bond include an ester of an aliphatic carboxylic acid having a hindered phenol group with an aliphatic alcohol, and examples of a hindered phenol compound having an amide bond include amides of an aliphatic carboxylic acid having a hindered phenol group with an aliphatic amine. In particular, the hindered phenolic compound preferably has an amide bond.

Specific structures of the hindered phenolic compound having an ester bond or an amide bond preferably include pentaerythritol tetrakis[3-(3,5-di-tert-butyl-4-hydroxyphenyl) propionate, which is commercially available from BASF as Irganox 1010; stearyl 3-(3,5-di-tert-butyl-4-hydroxyphenyl)propionate which is commercially available as Irganox 1076; 2,2'-thiodiethyl bis[3-(3,5-di-tert-butyl-4-hydroxyphenyl) propionate] which is commercially available as Irganox 1035; octadecyl 3-(3,5-di-tert-butyl-4-hydroxyphenyl)propanoate which is commercially available as Irganox 1135; bis(3-tert-butyl-4-hydroxy-5-methylbenzenepropanoic acid) ethylene bis(oxyethylene) which is commercially available as Ilganox 245; 1,6-hexanediol bis[3-(3,5-di-tert-butyl-4-hydroxyphenyl) propionate] which is commercially available as Irganox 259; N,N'-hexamethylene bis[3-(3,5-di-tert-butyl-4-hydroxyphenyl)propanamide] which is commercially available as Irganox 1098. In particular, preferred are N,N'-hexamethylene bis[3-(3,5-di-tert-butyl-4-hydroxyphenyl)propanamide] which is commercially available as Irganox 1098, and pentaerythritol tetrakis[3-(3,5-di-tert-butyl-4-hydroxyphenyl)propionate] which is commercially available as Irganox 1010, and the former is more preferable.

A resin composition (A) can further contain a thermoplastic resin other than a vinyl alcohol polymer (a) and a vinyl alcohol polymer (a'). Examples of the thermoplastic resin other than a vinyl alcohol polymer (a) and a vinyl alcohol polymer (a') include various polyolefins (polyethylene, polypropylene, poly 1-butene, poly 4-methyl-1-pentene, ethylene-propylene copolymer, a copolymer of ethylene and an α-olefin having 4 or more carbon atoms, a copolymer of a polyolefin and maleic anhydride, an ethylene-vinyl ester copolymer, an ethylene-an acrylate ester copolymer, or a modified polyolefin which is graft-modified with an unsaturated carboxylic acid or a derivative thereof and the like), various polyamides (Nylon 6, Nylon 6•6, Nylon 6/66 copolymer, Nylon 11, Nylon 12, polymeta-xylylene adipamide and the like), various polyesters (polyethylene terephthalate, polybutylene terephthalate, polyethylene naphthalate and the like), polyvinyl chloride, polyvinylidene chloride, polystyrene, polyacrylonitrile, polyurethane, polycarbonate, polyacetal, polyacrylate and a modified polyvinyl alcohol resin. A content of the thermoplastic resin in a resin composition (A) is generally less than 40 mass%, preferably less than 30 mass%, more preferably less than 20 mass%, further preferably less than 10 mass%, and can be less than 5 mass% or less than 1 mass%, particularly preferably substantially absent.

A proportion of a vinyl alcohol polymer (a) in a resin constituting a resin composition (A) is preferably 60 mass% or more, more preferably 70 mass% or more, further preferably 80 mass% or more, further preferably 90 mass% or more, particularly preferably 95 mass% or more in the light of more prominent effects of the present invention, and a resin constituting a resin composition (A) can be substantially only a vinyl alcohol polymer (a). A proportion of a vinyl alcohol polymer (a) in a resin composition (A) is preferably 60 mass% or more, more preferably 70 mass% or more, further preferably 80 mass% or more, further preferably 90 mass% or more, particularly preferably 95 mass% or more in the light of more prominent effects of the present invention, and a resin composition (A) can substantially consist of a vinyl alcohol polymer (a) and alkali metal ions (b).

In the light of improving gas barrier property at a low cost, the total content of a vinyl alcohol polymer (a) and a vinyl alcohol polymer (a') in a resin constituting a resin composition (A) is preferably 70 mass% or more, more preferably 90 mass% or more, further preferably 95 mass% or more, particularly preferably 99 mass% or more, and a resin constituting a resin composition (A) can substantially consist of a vinyl alcohol polymer (a) and a vinyl alcohol polymer (a').

In the light of improving gas barrier property at a low cost, the total content of a vinyl alcohol polymer (a) and a vinyl alcohol polymer (a') in a resin composition (A) is preferably 70 mass% or more, preferably 90 mass% or more, further preferably 95 mass% or more, particularly preferably 99 mass% or more, and a resin composition (A) can substantially consist of a vinyl alcohol polymer (a), a vinyl alcohol polymer (a') and alkali metal ions (b).

In the light of improving melt moldability, a melt flow rate (MFR) (210 °C, under a load of 2160 g) of a resin composition (A) determined in accordance with the method described in JIS K7210(2014) is preferably 0.1 to 30 g/10 min, more preferably 0.3 to 25 g/10 min, further preferably 0.5 to 20 g/10 min.

There are no particular restrictions to a resin composition (A), and it can be produced by melt-kneading a vinyl alcohol polymer (a) and alkali metal ions (b), and if necessary, other components such as a vinyl alcohol polymer (a'), multivalent metal ions (c) and a higher aliphatic carboxylic acid (d). These components can be blended in a solid state such as powder or as a molten material, or blended as a solute in a solution or a dispersoid in a dispersion. A solution and a dispersion are suitably an aqueous solution and an aqueous dispersion, respectively. Melt-kneading can be conducted using a known mixing or kneading device such as a kneader ruder, an extruder, a mixing roll and a Banbury mixer. A temperature range during melt-kneading can be appropriately adjusted depending on a melting point of a vinyl alcohol polymer (a) and each component used or the like; it is generally 150 to 250 °C. Alternatively, some components are preliminarily added to a vinyl alcohol polymer (a), and then additional required other components can be melt-kneaded for production. An exemplary method for preliminarily adding some components to a vinyl alcohol polymer (a) is that a vinyl alcohol polymer (a) as pellets or powder is immersed in a solution in which the components to be added are dissolved. The solution is suitably an aqueous solution.

### <Adhesive resin (B)>

A multilayer film of the present invention has a layer (Y) containing an adhesive resin (B) with a melting point of lower than 150 °C as a main component. When a multilayer film of the present invention contains a layer (Y), a multilayer film excellent in appearance and interlayer adhesiveness tends to be obtained. The adhesive resin (B) can be, for example, a carboxylic-acid modified polyolefin resin prepared by graft polymerization of a polyolefin resin with an unsaturated carboxylic acid such as maleic anhydride or its derivative. A melting point of the adhesive resin (B) mainly depends on a polyolefin resin before carboxylic-acid modification. For the polyolefin resin, the description below for a polyolefin resin (C) is applied as it is.

A proportion of a carboxylic-acid modified polyolefin resin in the adhesive resin (B) is preferably 70 mass% or more, more preferably 80 mass% or more, further preferably 95 mass% or more, and the adhesive resin (B) can substantially consist of a carboxylic-acid modified polyolefin resin. Furthermore, a proportion of the adhesive resin (B) in the layer (Y) is preferably 70 mass% or more, more preferably 80 mass% or more, further preferably 95 mass% or more, and the layer (Y) can substantially consist of the adhesive resin (B).

### <polyolefin resin (C)>

A multilayer film of the present invention has a layer (Z) containing a polyolefin resin (C) with a melting point of lower than 150 °C as a main component. There are no particular restrictions to the polyolefin resin (C) as long as it is a polyolefin with a melting point of lower than 150 °C; examples include polyethylene resins such as linear low-density polyethylene, low-density polyethylene, medium-density polyethylene and high-density polyethylene; vinyl ester resins; ethylene-propylene copolymer; propylene-α-olefin copolymer (α-olefin having 4 to 20 carbon atoms); olefin homopolymers or copolymers such as polybutene and polypentene; and polyethylene chloride. In the light of improving recyclability of a multilayer structure containing the polyolefin resin (C), the polyolefin resin (C) preferably contains a polyethylene resin as a main component, and more preferably consists of a polyethylene resin. Irrespective of the presence of gas barrier property, a polyethylene resin has been extensively used for a packaging material, so that there are widely recycling infrastructures therefor in many countries. When the polyolefin resin (C) contains a polyethylene resin as a main component, the polyethylene resin is preferably at least one selected from the group consisting of a linear low-density polyethylene, a low-density polyethylene, a medium-density polyethylene and a high-density polyethylene, more preferably at least one selected from the group consisting of a linear low-density polyethylene and a low-density polyethylene or a mixture of a high-density polyethylene and at least one selected from the group consisting of a linear low-density polyethylene and a low-density polyethylene.

In the light of more prominent effects of the present invention, a melting point of the polyolefin resin (C) is preferably lower than 140 °C, more preferably lower than 130 °C. In the light of processability during secondary processing such as stretching and in the light of thermal resistance as a packaging material, a melting point of the polyolefin resin (C) is preferably 80 °C or higher, more preferably 90 °C or higher. In the light of improving melt moldability, a melt flow rate (MFR) (210 °C, under a load of 2160 g) of the polyolefin resin (C) determined in accordance with the method described in JIS K7210(2014) is preferably 0.1 to 30 g/10 min, more preferably 0.3 to 25 g/10 min, further preferably 0.5 to 20 g/10 min.

The polyolefin resin (C) preferably contains a polyethylene resin as a main component, and a content of the polyethylene resin in the polyolefin resin (C) is more preferably 70 mass% or more, further preferably 80 mass% or more, particularly preferably 95 mass%, and the polyolefin resin (C) can substantially consist of a polyethylene resin. A proportion of the polyolefin resin (C) in a layer (Z) is preferably 70 mass% or more, more preferably 80 mass% or more, further preferably 95 mass% or more, and the layer (Z) can substantially consist of the polyolefin resin (C).

The layer (Y) and the layer (Z) contain, as a main component, the adhesive resin (B) and the polyolefin resin (C), respectively, and as long as the effects of the present invention are not impaired, these layers can contain other components such as an antioxidant, a plasticizer, a heat stabilizer (a melt stabilizer), a photo initiator, a deodorant, a UV absorber, an antistatic, a lubricant, a colorant, a filler, a desiccant, a filler, a pigment, a dye, a processing aid, a flame retardant and an antifogging agent. However, the total amount of each component to each layer is less than 50 mass%, preferably less than 40 mass%, more preferably less than 30 mass%, further preferably less than 20 mass%, particularly preferably less than 10 mass%.

### <Multilayer film>

A multilayer film of the present invention has a structure in which a layer (X) is an outermost layer and at least the layer (X), the layer (Y) and the layer (Z) are adjacently laminated in sequence. The multilayer film can have a plurality of the layer (X), the layer (Y) and the layer (Z), respectively. Examples of a layer structure of the multilayer film of the present invention include X/Y/Z, X/Y/Z/Y/X, and X/Y/Z/Y/X/Y/Z/Y/X, wherein X, Y and Z represent the layer (X) the layer (Y) and the layer (Z), respectively, and "/" means direct lamination.

In the light of gas barrier property, recyclability and economy, a thickness of the layer (X) which a multilayer film of the present invention has is preferably 0.2 µm or more and less than 20 µm. It is also preferable that a ratio of a thickness of the layer (X) to the total thickness of all layers of the multilayer film is less than 25 %. A thickness of the layer (X) is more preferably 0.4 µm or more and less than 16 µm, further preferably 0.6 µm or more and less than 12 µm. A ratio of a thickness of the layer (X) to the total thickness of all layers of the multilayer film is more preferably less than 20 %, further preferably less than 15 %. The thickness of all layers of the multilayer film is generally 10 µm or more and less than 200 µm, preferably 10 µm or more and less than 150 µm. For a stretched multilayer film described later, a thickness of all layers is preferably 10 µm or more and less than 50 µm, more preferably less than 40 µm.

A multilayer film of the present invention can be an unstretched multilayer film, or a stretched multilayer film which is uniaxially or biaxially (at least uniaxially) stretched. Uniaxial or biaxial stretching allows for improving mechanical properties or gas barrier property of a multilayer film obtained. In the light of economy and in the light of easily tearing a multilayer film (when being used as a packaging material, the packaging material can be easily opened), the multilayer film is preferably an uniaxially stretched multilayer film, and in the light of less anisotropic mechanical properties and gaining a tough film, the multilayer film is preferably a biaxially stretched multilayer film. In the light of thickness uniformity and mechanical strength of a multilayer film obtained, stretching at least uniaxially 3 times or more and less than 12 times is preferable. For an uniaxially stretched multilayer film, stretching uniaxially 3 times or more and less than 12 times is preferable, and stretching 4 times or more and less than 10 times is more preferable. For a biaxially stretched multilayer film, biaxially stretching 3 times or more and less than 12 times in each direction is preferable, and stretching 4 times or more and less than 10 times is more preferable.

There are no particular restrictions to a method for depositing a multilayer film of the present invention, and generally a conventional co-extrusion where individual resins are extruded from separate dies or a common die for lamination can be used. A die used can be either an annular die or a T-die. There are also no restrictions to a method for uniaxially or biaxially stretching, and the multilayer film can be produced by stretching in a film-flow direction and/or a direction perpendicular to the flow direction, that is, a width direction by a well-known stretching method such as roll type uniaxial stretching, tubular type simultaneous biaxial stretching, tenter type sequential biaxial stretching, and tenter type simultaneous biaxial stretching. Among these, the effects of the present invention is particularly prominent for a multilayer film produced by tenter type sequential biaxial stretching. A temperature during stretching is generally 40 to 150 °C, more preferably 50 to 140 °C, possibly 60 to 130 °C in the light of processability. A multilayer film of the present invention has an advantage that even when a stretching temperature is relatively lower such as 120 °C, problems such as defective appearance and deteriorated interlayer adhesiveness after stretching hardly occur. It is preferable that, if necessary, the product is heated at a temperature of a glass transition point or higher and lower than a melting point after stretching to increase crystallinity and fix an orientation of a molecular chain, so-called heat fixation.

### <Inorganic vapor deposition layer (I)>

The above problems are also solved by a vapor deposition multilayer film, comprising a multilayer film of the present invention having an inorganic vapor deposition layer (I) on an exposed surface side of the layer (X). The inorganic vapor deposition layer (I) is a layer made of an inorganic material such as a metal and an inorganic oxide, and exhibiting gas barrier property to oxygen and water vapor. The layer (X) can form an inorganic vapor deposition layer (I) which exhibits higher affinity to a metal or an inorganic oxide than a common thermoplastic resin and is dense with no defects, and interlayer adhesiveness of the layer (X) to the inorganic vapor deposition layer (I) in the vapor deposition multilayer film is improved. Furthermore, since the layer (X) has gas barrier property, gas barrier property can be prevented even when defects generate in the inorganic vapor deposition layer (I) by, for example, bending. A thickness of the inorganic vapor deposition layer (I) is generally less than 500 nm. With a thickness being less than 500 nm, viscosity during melt molding of a crushed multilayer structure containing the inorganic vapor deposition layer (I) is very stable and generation of gel and hard spots can be prevented.

The inorganic vapor deposition layer (I) is preferably either a metal vapor deposition layer which contains aluminum as a main component, or an inorganic oxide vapor deposition layer which contains alumina or silica as a main component. For providing light shielding ability, a metal vapor deposition layer is preferable, but in the light of content visibility and microwave oven suitability as a packaging material and prevention of generation of gel or hard spots during melt molding of a crushed product, an inorganic oxide vapor deposition layer is preferable.

A metal vapor deposition layer is generally a layer containing aluminum as a main component. A content of aluminum atoms in a metal vapor deposition layer is preferably 50 mol% or more, more preferably 70 mol% or more, further preferably 90 mol% or more, particularly preferably 95 mol% or more. An average thickness of a metal vapor deposition layer is preferably 120 nm or less, more preferably 100 nm or less, further preferably 90 nm or less. An average thickness of a metal vapor deposition layer is preferably 25 nm or more, more preferably 35 nm or more, further preferably 45 nm or more. Here, an average thickness of a metal vapor deposition layer is an average of thicknesses at arbitrary 10 points of the metal vapor deposition layer cross-section as determined by electron microscopy. When a multilayer film of the present invention has a metal vapor deposition layer, a light transmittance at a wavelength of 600 nm can be reduced to 10 % or less, providing excellent light shielding ability.

Examples of an inorganic oxide vapor deposition layer include vapor deposition films of an inorganic oxide such as oxides of silicon, aluminum, magnesium, calcium, potassium, tin, sodium, boron, titanium, lead, zirconium or yttrium, preferably alumina or silica. An average thickness of an inorganic oxide vapor deposition layer is preferably 60 nm or less, more preferably 50 nm or less, further preferably 40 nm or less. An average thickness of an inorganic oxide vapor deposition layer is preferably 10 nm or more, more preferably 15 nm or more, further preferably 20 nm or more. Here, an average thickness of an inorganic oxide vapor deposition layer is an average of thicknesses at arbitrary 10 points of the inorganic oxide vapor deposition layer cross-section as determined by electron microscopy. When a multilayer film of the present invention has an inorganic oxide vapor deposition layer, a light transmittance at a wavelength of 600 nm can be increased to 80 % or more, providing excellent content visibility when being used as a packaging material. In the light of further improvement of visibility, a light transmittance at a wavelength of 600 nm is more preferably 90 % or more. A light transmittance can be increased by, for example, reducing thickness irregularity in a multilayer film of the present invention used for producing a vapor deposition multilayer film. A layer (X) as an outermost layer of a multilayer film of the present invention contains a vinyl alcohol polymer (a) with a melting point of lower than 150 °C as a main component, so that thickness irregularity is reduced, resulting in tendency to exhibit a higher light transmittance. Thickness irregularity of a multilayer film of the present invention can be further reduced by, for example, at least uniaxial stretching. A light transmittance of a multilayer film of the present invention at a wavelength of 60 nm is preferably 80 % or more, more preferably 90 % or more.

An inorganic vapor deposition layer (I) can be deposited by a known physical or chemical vapor deposition. Specific examples include vacuum vapor deposition, sputtering, ion plating, ion beam mixing, plasma CVD, laser CVD, MO-CVD and thermal CVD, and physical vapor deposition is preferable, and among others, vacuum vapor deposition is particularly preferable. Without impairing the effects of the present invention, a protective layer (top coat layer) can be, if necessary, formed on the inorganic vapor deposition layer (I). The upper limit of a surface temperature of a layer (X) during depositing an inorganic vapor deposition layer (I) is preferably 60 °C, more preferably 55 °C, further preferably 50 °C. The lower limit of a surface temperature of a layer (X) during depositing an inorganic vapor deposition layer (I) is, but not limited to, preferably 0 °C, more preferably 10 °C, further preferably 20 °C. Before film deposition, an exposed surface of the layer (X) can be plasma-processed. The plasma processing can be a known processing, preferably atmospheric pressure plasma processing. The atmospheric pressure plasma processing employs, as a discharge gas, nitrogen, helium, neon, argon, krypton, xenon, radon and the like. Among these, nitrogen, helium, and argon are preferably used, and nitrogen is particularly preferable because a cost can be reduced.

For a multilayer film or vapor deposition multilayer film of the present invention, an oxygen transmission rate (20 °C, under the condition of 65 %RH) as determined in accordance with the method described in JIS K 7126-2(equal-pressure method; 2006) is preferably less than 60 cc/(m²•day•atm), more preferably less than 40 cc/(m²•day•atm), further preferably less than 20 cc/(m²•day•atm), further preferably less than 5 cc/(m²•day•atm), particularly preferably less than 1 cc/(m²•day•atm). A multilayer film and a vapor deposition multilayer film with an oxygen transmission rate in the above range has excellent gas barrier property.

### <Multilayer structure>

Although a multilayer film or vapor deposition multilayer film of the present invention itself can be used as a packaging material having gas barrier property, it can be laminated with at least one resin layer (R) containing a thermoplastic resin (D) as a main component to provide a multilayer structure, which is endowed with various functions as a packaging material such as a design and heat-sealing ability. Examples of a thermoplastic resin (D) include, but not limited to, a homopolymer or copolymer of an olefin such as a linear low-density polyethylene, a low-density polyethylene, a medium-density polyethylene, a high-density polyethylene, a vinyl ester resin, an ethylene-propylene copolymer, polypropylene, a propylene-α-olefin copolymer (α-olefin having 4 to 20 carbon atoms), polybutene, and polypentene; polyamides such as Nylon 6 and Nylon 6,6; polyesters such as a polyethylene terephthalate, polybutyrene terephthalate and polyethylene naphthalate; polystyrene; polyvinyl chloride; polyvinylidene chloride; acrylic resins; polycarbonate; polyethylene chloride; and polypropylene chloride. Among these, in the light of excellent moisture resistance, mechanical properties, economy and heat-sealing ability, a polyolefin is preferable, and in the light of excellent mechanical properties, heat resistance and the like, a polyamide and a polyester are preferable. For obtaining a multilayer structure exhibiting particularly excellent recyclability, it is preferable that the thermoplastic resin (D) is of the same type as the polyolefin resin (C) described above, that is, it is preferably a polyolefin resin with a melting point of less than 150 °C, more preferably it contains a polyethylene resin as a main component, and further preferably it is a polyethylene resin. Therefore, for obtaining a multilayer structure exhibiting excellent recyclability, it is preferable that the polyolefin resin (C) and the thermoplastic resin (D) contain a polyethylene resin as a main component, and more preferably, these are a polyethylene resin. Such a resin layer (R) can be unstretched, or uniaxially or biaxially stretched or rolled. In the light of improving mechanical strength, it is preferably a biaxially stretched layer, and in the light of improving heat-seal ability, it is preferably an unstretched layer.

There are no particular restrictions to a method for depositing a resin layer (R), and it is generally deposited by melt extrusion with an extruder. A die can be either an annular die or a T-die. There are also no restrictions to a method for uniaxially or biaxially stretching, and the multilayer film can be produced by stretching in a film-flow direction and/or a direction perpendicular to the flow direction, that is, a width direction by a well-known stretching method such as roll type uniaxial stretching, tubular type simultaneous biaxial stretching, tenter type sequential biaxial stretching, and tenter type simultaneous biaxial stretching. A stretching ratio is preferably 8 to 60 times as an area magnification in the light of thickness uniformity and mechanical strength of a layer obtained. An area magnification is more preferably 55 times or less, further preferably 50 times or less. Furthermore, an area magnification is more preferably 9 times or more. If an area magnification is less than 8 times, stretch unevenness may remain, and if it is more than 60, breaking of a layer during stretching may tend to occur.

A thickness of a resin layer (R) is preferably 10 to 200 µm in the light of industrial productivity. Specifically, for an unstretched layer, a thickness is more preferably 10 to 150 µm, and for a biaxially stretched layer, a thickness is more preferably 10 to 50 µm.

The total thickness of a multilayer structure of the present invention is preferably 300 µm or less. With the total thickness being within the range, a multilayer structure of the present invention is lightweight and flexible, so that it is preferably used in applications of soft packaging. Furthermore, the amount of a resin used for a multilayer structure is reduced, leading to reduction of environmental burden.

A thickness of each layer in a multilayer structure of the present invention can be appropriately adjusted depending on its application, and in the light of prevention of coloration during melt molding of a crushed product, improvement of thermal stability during melt molding, and prevention of generation of hard spots, at least one of a layer (Z) and a resin layer (R) contains a polyethylene resin as a main component, and a ratio of a thickness of a layer containing a polyethylene resin as a main component to the total thickness of the multilayer structure is preferably 0.75 or more, more preferably 0.85 or more. Meanwhile, in the light of improving gas barrier property, the ratio is preferably 0.98 or less.

It is preferable that in a multilayer structure of the present invention, a layer comprising a resin having a melting point of 240 °C or higher as a main component and a metal layer with a thickness of 1 µm or more are absent. Without a layer comprising a resin having a melting point of 240 °C or higher as a main component or a metal layer with a thickness of 1 µm or more, heterogeneous mixing of a crushed multilayer structure with other components can be prevented during melt molding. Here, a metal layer is a layer having a continuous and a discontinuous surfaces made of a metal such as an aluminum foil. In a multilayer structure of the present invention, more preferably a layer comprising a resin having a melting point of 220 °C or higher as a main component is absent, and further preferably a layer comprising a resin having a melting point of 200 °C or higher as a main component is absent.

There are no particular restrictions to a method for laminating a resin layer (R) on a multilayer film of the present invention; for example, extrusion lamination, co-extrusion lamination and dry-lamination. When a resin layer (R) is laminated on a multilayer film, an adhesive layer can be formed. That is, each layer constituting a multilayer structure of the present invention can be, if necessary, laminated via an adhesive layer. However, there is not an adhesive layer between the layer (X) and the layer (Y) in the multilayer film, and between the layer (Y) and the layer (Z). The adhesive layer can be formed by applying a known adhesive and then drying it. The adhesive is preferably a two-part reaction type polyurethane adhesive, in which a polyisocyanate component and a polyol component are blended and reacted. A thickness of the adhesive layer is, but not limited to, preferably 1 to 5 µm, more preferably 2 to 4 µm.

There are no particular restrictions to a multilayer structure of the present invention, and for example, a layer structure as described below is preferable in the light of providing a multilayer structure with excellent recyclability. Here, in the layer structure below, X is a layer (X), Y is a layer (Y), Z is a layer (Z), I is an inorganic vapor deposition layer (I), R is a layer (R), "/" denotes direct lamination, and "//" denotes lamination via an adhesive layer.
(1) Z/Y/X//R
(2) Z/Y/X/I//R
(3) R//Z/Y/X//R
(4) R//Z/Y/X/I//R

In the above layer structure, layer (X), layer (Y) and layer (Z) are preferably at least uniaxially stretched, more preferably biaxially stretched. The layer (Z) and the layer (R) are preferably made of a polyethylene resin, and the layer (Y) is preferably a maleic-anhydride modified polyethylene resin. The layer (X) is a layer made of a resin composition (A) containing a vinyl alcohol polymer (a) having a modifying group containing a primary hydroxy group as a main component.

As long as the effects of the present invention are not impaired, a multilayer structure of the present invention can have a layer other than those described above. An example of the other layer is a recovery layer. In particular, preferably a recovered composition containing a recovered material of a multilayer structure of the present invention described later is recycled as a part or all of the recovery layer. Another example of the other layer is a printed layer. A printed layer can be disposed at any position of a multilayer structure of the present invention. A printed layer can be a coating film prepared by applying a solution containing, for example, a pigment or dye and if necessary, a binder resin and then drying it. Examples of a method for coating a printed layer include, in addition to gravure printing, various coating methods using a wire bar, a spin coater, a die coater or the like. A thickness of an ink layer is, but not limited to, preferably 0.5 to 10 µm, more preferably 1 to 4 µm.

It is preferable to recycle a recovered material (scrap) which is collected edges and/or defective products generated in producing a multilayer structure of the present invention. A method for recovering a multilayer structure where a multilayer structure of the present invention is crushed and then melt-molded, and a recovered composition containing a recovered material of a multilayer structure of the present invention are also suitable embodiments of the present inventions.

In recovery of a multilayer structure of the present invention, first, a recovered material of the multilayer structure of the present invention is crushed. The crushed recovered material can be as it is melt-molded to provide a recovered composition, or if necessary, it can be melt-molded with other components to provide a recovered composition. A suitable component to be added to the recovered material is preferably a polyolefin resin, more preferably a polyethylene resin. The polyolefin resin can be those as the polyolefin resin (C) mentioned above used for a multilayer film of the present invention. The crushed recovered material can be directly used for production of a molded article such as a multilayer structure, or a crushed recovered material can be melt-molded to give pellets made of the recovered composition, which are then used for production of a molded article.

A mass ratio of the resin component (A) to the polyolefin resin [resin composition (A)/polyolefin resin] in the recovered composition is preferably 0.01/99.99 to 20/80. If the mass ratio is less than 0.01/99.99, a use proportion of the recovered material may be reduced. If the mass ratio is more than 20/80, melt moldability and mechanical properties of the recovered composition may be deteriorated. In the light of improving melt moldability and mechanical properties of a recovered composition obtained, the above mass ratio is more preferably 15/85 or less, further preferably 10/90 or less, and can be 5/95 or less.

A multilayer structure of the present invention has excellent appearance, gas barrier property and recyclability, so that it can be suitably used as a material for various packaging such as food packaging, pharmaceutical packaging, industrial chemical packaging and agrochemical packaging. In particular, a packaging material comprising a multilayer structure of the present invention can be suitably used as a packaging material with excellent recyclability.

### EXAMPLES

There will be specifically described the present invention with reference to Examples, but the present invention is not limited by these examples in any manner.

### [Production Example 1]

### (1) Synthesis of a modified EVAc

In a 50 L high-pressure reaction tank equipped with a jacket, a stirrer, a nitrogen inlet, an ethylene inlet and an initiator addition port were charged 21 kg of vinyl acetate (hereinafter, referred to as "VAc"), 1.1 kg of methanol (hereinafter, referred to as "MeOH") and 2.0 kg of 2-methylene-1,3-propanediol diacetate (modifying agent 1, hereinafter, referred to as "MPDAc"), and the mixture was heated to 60 °C followed by nitrogen bubbling for 30 min, to replace the atmosphere of the reaction tank with nitrogen. Then, ethylene was introduced such that a reaction tank pressure (ethylene pressure) became 3.8 MPa. After a temperature in the reaction tank was adjusted to 60 °C, a solution of 16.8 g of 2,2'-azobis(2,4-dimethylvaleronitrile) ("V-65", from Wako Pure Chemical Corporation) as an initiator in methanol was added to initiate polymerization. During the polymerization, an ethylene pressure and a polymerization temperature were maintained at 3.8 MPa and 60 °C, respectively. 5 hours after polymerization initiation, a solution of additional 16.8 g of the initiator in methanol was added, and 10 hours after polymerization initiation, a polymerization rate of VAc reached 9 % and then the mixture was cooled to terminate the polymerization. The reaction tank was opened to expel ethylene followed by nitrogen gas bubbling, to completely expel ethylene. Subsequently, unreacted VAc was removed under reduced pressure, and then MeOH was added to the modified ethylene-vinyl acetate copolymer (herein, sometimes referred to as "modified EVAc") to which a structural unit derived from MPDAc by copolymerization, to prepare a 20 % by mass MeOH solution.

### (2) Synthesis of a modified EVOH

In a 100 L reaction tank equipped with a jacket, a stirrer, a nitrogen inlet, a reflux condenser and a solution addition port, 4715 g of a 20 % by mass solution of the modified EVAc in MeOH obtained by repeating the process in (1) was charged. While bubbling nitrogen into the solution, the solution was heated to 60 °C, and a 2 N concentration solution of sodium hydroxide in MeOH at a rate of 4.7 mL/min over 2 hours. After addition of the solution of sodium hydroxide in MeOH, the mixture was stirred for 2 hours while a reaction system temperature was kept at 60 °C, to let saponification reaction proceed. Then, 254 g of acetic acid was added for terminating the saponification reaction. Then, while the mixture was stirred under heating at 80 °C, 3 L of ion-exchange water was added and MeOH was discharged out of the reaction tank, to precipitate a modified ethylene-vinyl alcohol copolymer (hereinafter, referred to as "modified EVOH"). The precipitated modified EVOH was collected by decantation and pulverized by a mixer. The modified EVOH powder thus obtained was then added to a 1 g/L aqueous solution of acetic acid (bath ratio 20: 20 L of the aqueous solution / 1 kg of the powder) and the mixture was washed with stirring for 2 hours. This was deliquored and further added to a 1 g/L aqueous solution of acetic acid (bath ratio: 20) and was washed with stirring for 2 hours. This was deliquored, the residue was added to ion-exchange water (bath ratio: 20) and washed with stirring for 2 hours followed by deliquoring. This process was repeated three times for purification. The product was immersed with stirring in 10 L of an aqueous solution containing 0.5 g/L of acetic acid and 0.1 g/L of sodium acetate for 4 hours and was deliquored. The product was dried at 60 °C for 16 hours, to give a crude dried modified EVOH.

### (3) Production of water-containing modified EVOH pellets

In a 3 L stirring tank equipped with a jacket, a stirrer and a reflux condenser, 758 g of the crude dried modified EVOH obtained by repeating the process in (2), 398 g of water and 739 g of MeOH were charged, and the mixture was heated to 85 °C for dissolution. This solution was extruded through a glass tube with a diameter of 4 mm into a mixed solution of water/MeOH = 90/10 cooled to 5 °C to precipitate a strand, which was then cut by a strand cutter into pellets, that is, water-containing pellets of the modified EVOH. A moisture content of the water-containing pellet of the modified EVOH obtained was determined to be 55 % by mass as measured by a halogen moisture analyzer "HR73" from Mettler Toledo.

### (4) Production of modified EVOH pellets and resin composition pellets

To a 1 g/L aqueous solution of acetic acid (bath ratio: 20), 1577 g of the water-containing pellets of the modified EVOH obtained by repeating the process in (3) were added, and washed with stirring for 2 hours. This was deliquored, and then charged into a 1 g/L aqueous solution of acetic acid (bath ratio: 20), and the mixture was washed with stirring for 2 hours. After deliquoring, the same procedure was repeated with a fresh aqueous solution of acetic acid. The washed and deliquored product was added to ion-exchange water (bath ratio: 20) and washed with stirring for two hours followed by deliquoring. This procedure was repeated three times for purification, to give water-containing pellets of the modified EVOH free from the catalyst residue generated during the saponification reaction. The water-containing pellets were added to an aqueous solution of sodium acetate and acetic acid (bath ratio: 20), and immersed for 4 hours with periodic stirring. The pellets were deliquored, dried at 80 °C for 3 hours and then at 105 °C for 16 hours, to give modified EVOH pellets. Subsequently, the modified EVOH pellets and calcium stearate were mixed and then the mixture was fed to a twin-screw extruder "TEX30α" (screw diameter: 30 mm) manufactured by Japan Steel Works, Ltd. Using a screw having a forward staggered kneading disk with L (screw length) / D (screw diameter) = 3, melt extrusion was conducted under the conditions of a melting temperature of 210 to 220 °C and an extrusion speed of 20 kg/hr, to give strands. The obtained strands were cooled and solidified in a cooling bath and then cut to provide resin composition A1 pellets. In this process, the amounts of the components were appropriately adjusted such that the contents in the resin composition were as described in Table 1.

### (5) Content of each structural unit in a modified EVAc

Contents of ethylene units, vinyl acetate units and MPDAc units in the modified EVAc were calculated from ¹H-NMR measurement of the modified EVAc before saponification. First, a small amount of the solution of the modified EVAc in MeOH obtained in (1) was sampled, and then the modified EVAc was precipitated in ion-exchange water. The precipitate was collected and dried at 60 °C under vacuum, to give a dried modified EVAc. Subsequently, the dry modified EVAc obtained was dissolved in dimethyl sulfoxide (DMSO)-d6 containing tetramethylsilane as an internal standard, and measured using a 500 MHz ¹H-NMR ("GX-500" from JEOL Ltd.) at 80 °C. The obtained spectrum was analyzed, and a content of ethylene units was 27.0 mol%, a content of vinyl ester units was 65.0 mol%, and a content of MPDAc units was 8.0 mol%.

### (6) Saponification degree of a modified EVOH

Likewise, a modified EVOH after saponification was subjected to ¹H-NMR spectrometry. The crude dried modified EVOH obtained in (2) was dissolved in dimethyl sulfoxide (DMSO)-d₆ containing tetramethylsilane as an internal standard and tetrafluoroacetic acid (TFA) as an additive, and measured by a 500 MHz ¹H-NMR ("GX-500" from JEOL Ltd.) at 80 °C. The spectrum obtained was analyzed and a saponification degree of the modified EVOH was 99.9 mol% or more.

### (7) Melting point of a modified EVOH

Using a differential scanning calorimeter ("Q2000" from TA Instrument), the modified EVOH pellets obtained in (4) were warmed from 20 °C to 220 °C at a rate of 10 °C /min, cooled to 20 °C at a rate of 10 °C/min, and again warmed from 20 °C to 220 °C at a rate of 10 °C/min. A temperature at which a maximum value of an endothermic peak during the second warming was determined as a melting point. Resultantly, a melting point of the modified EVOH was 125 °C.

### (8) Contents of alkali metal ions (b), multivalent metal ions (c) and a higher aliphatic carboxylic acid (d) in a resin composition

In a Teflon^{®} pressure vessel, 0.5 g of the resin composition pellets obtained in (4) was charged, and to the mixture was added 5 mL of concentrated nitric acid, to allow for decomposition at room temperature for 30 min. After decomposition, a lid was put on the vessel, and the mixture was heated by a wet decomposition apparatus ("MWS-2" from ACTAC Co., Ltd.) at 150 °C for 10 min and then at 180 °C for 5 min for further decomposition, and then cooled to room temperature. This process liquid was transferred to a 50 mL measuring flask and diluted with pure water to the predetermined volume. This solution was analyzed by an ICP emission spectrophotometer ("Optima 4300DV" from PerkinElmer Co., Ltd.), to determine contents of the alkali metal ions (b) and the multivalent metal ions (c). For contents of these components, a sodium ion content was 250 ppm, and a calcium ion content was 100 ppm.

A content of a higher aliphatic carboxylic acid (d) was calculated from the amount of calcium stearate added in melt extrusion as described in (4), and was 1500 ppm.

### (9) Yellow index of resin composition pellets

An yellow index (YI) of the resin composition pellets obtained in (4) was determined using a spectral colorimeter ("LabScan XE Sensor" from HunterLab), and the measurements were classified in accordance with the following criteria. Here, a YI value is an index representing yellowness of an object. The higher a YI value is, the stronger yellowness is and the less coloring is.

### Classification: criteria

A: less than 15
B: 15 or more and less than 25
C: 25 or more and less than 35
D: 35 or more and less than 45
E: 45 or more

### (10) Thermal decomposition temperature of resin composition pellets

The resin composition pellets obtained in (4) was warmed from 20 °C to 600 °C at a rate of 10 °C/min under a nitrogen atmosphere using a thermogravimetry apparatus ("Q2000" from TA Instrument) and based on a temperature at which a mass was reduced to 95 % of the original mass, classification was conducted in accordance with the following criteria.

Classification: criteria
A: 360 °C or higher
B: 350 °C or higher and lower than 360 °C
C: 340 °C or higher and lower than 350 °C
D: 330 °C or higher and lower than 340 °C
E: lower than 330 °C

### [Production Examples 2 to 6 and C1, C2]

Pellets of resin compositions A2 to A6, AC1, AC2 were produced as described in Production Example 1, except that the amount of sodium acetate added in (4) was changed such that the amount of alkali metal ions (b) in a resin composition obtained was as shown in Table 1.

### [Production Example 7]

Pellets of resin composition A7 were produced as described in Production Example 1, except that sodium acetate added in (4) was replaced with potassium acetate and its amount was changed such that the amount of alkali metal ions (b) in a resin composition obtained was as shown in Table 1.

### [Production Examples 8 to 13]

Pellets of resin compositions A8 to A13 were produced as described in Production Example 1, except that the amount of calcium stearate added in (4) was changed as shown in Table 1.

### [Production Example 14]

Pellets of resin composition A14 were produced as described in Production Example 1, except that calcium stearate added in (4) was replaced with magnesium stearate, and its amount was changed as shown in Table 1.

### [Production Example 15]

Pellets of resin composition A15 were produced as described in Production Example 1, except that calcium stearate added in (4) was replaced with zinc stearate, and its amount was changed as shown in Table 1.

### [Production Example 16]

Pellets of resin composition A16 were produced as described in Production Example 1, except that calcium stearate added in (4) was replaced with an aqueous solution of calcium acetate using a liquid addition pump, and its amount was changed as shown in Table 1.

### [Production Example 17]

Pellets of resin composition A17 were produced as described in Production Example 1, except that calcium stearate added in (4) was replaced with stearic acid, and its amount was changed as shown in Table 1.

### [Production Examples 18 to 21 and C3]

Pellets of resin compositions A18 to A21, AC3 were produced as described in Production Example 1, except that the polymerization conditions in (1) were changed and a content of modifying group units containing a primary hydroxy group was changed as shown in Table 1.

### [Production Example 22]

Pellets of resin composition A22 were produced as described in Production Example 1, except that in (1), MPDAc was replaced with 3,4-diacetoxy-1-butene (modifying agent 2); the polymerization conditions were changed; and contents of ethylene units and primary-hydroxy modifying group units were changed as shown in Table 1.

### [Production Example 23]

28 parts by weight of zinc acetylacetonate monohydrate and 957 parts by weight of 1,2-dimethoxyethane were mixed to give a mixed solution. To the mixed solution thus prepared, 15 parts by weight of trifluoromethanesulfonic acid was added with stirring, to give a catalyst solution. Then, to TEM-35BS extruder (37 mmϕ, L/D=52.5) from Toshiba Machine Co., Ltd., an EVOH with an ethylene unit content of 44.0 mol% and a saponification degree of 99.9 mol% or more (although alkali metal ions, multivalent metal ions and a higher aliphatic carboxylic acid were absent) was charged, and the extruder was operated under the conditions of barrel C1: water cooled, barrels C2 to C3: 200 °C, barrels C4 to C15: 240 °C, and screw rotation speed: 250 rpm. From press-in port 1 in C8, epoxypropane (1.5 kg/hr) and the above catalyst solution were added. Then, from press-in port 2 in C13, an aqueous solution of sodium acetate was added. The discharged strands were cooled and solidified in a cooling bath and then cut to provide modified EVOH pellets. In this process, the amount of the catalyst solution was adjusted such that a melting point of the modified EVOH pellets thus obtained was 108 °C. Pellets of resin composition A23 were produced as described in Production Example 1, except that the modified EVOH pellets were used.

### [Production Examples 24 and 25]

Pellets of resin compositions A24, A25 were produced as described in Production Example 1, except that in (1), MPDAc was absent; the polymerization conditions were changed; and an ethylene unit content was changed as shown in Table 1.

### [Production Examples 26 and 27]

Pellets of resin compositions A26, A27 were produced as described in Production Example 1, except that in (1), MPDAc was absent and the polymerization conditions were changed; in (2), the saponification reaction conditions were changed; and an ethylene unit content and a saponification degree were changed as shown in Table 1.

### [Production Examples C5 and C6]

Pellets of resin compositions AC5, AC6 were produced as described in Production Example 1, except that in (1), MPDAc was absent; the polymerization conditions were changed; and an ethylene unit content was changed as shown in Table 1.

### [Production Examples 28 to 30 and C4]

Resin composition A1 obtained in Production Example 1 and resin composition AC5 obtained in Production Example C5 were melt-mixed at a ratio shown in Table 1, to produce pellets of resin compositions A28 to A30, AC4. Specifically, pellets of resin compositions were mixed and then fed to a twinscrew extruder "TEX30α" (screw diameter: 30 mm) manufactured by Japan Steel Works, Ltd. Using a screw having a forward staggered kneading disk with L (screw length) / D (screw diameter) = 3, melt extrusion was conducted under the conditions of a melting temperature of 210 to 220 °C and an extrusion speed of 20 kg/hr, to give strands. The obtained strands were cooled and solidified in a cooling bath and then cut to provide pellets of resin compositions A28 to A30, AC4.

**[Table 1]**

| | Resin composition (A) | | | | | | | | | | | | | | | | | Evaluation | |
|---|---|---|---|---|---|---|---|---|---|---|---|---|---|---|---|---|---|---|---|
| | Type | Vinyl alcohol polymer (a) | | | | | | | Vinyl alcohol polymer (a') | | | Mass ratio (a/a') | Alkali metal ions (b) | | Multivalent metal ions (c) | | Higher aliphatic carboxylic acid (d) ⁴⁾ | YI | Thermal decomposition temperature |
| | | Melting point (°C) | Ethylene unit content (mol%) | Saponification degree (mol%) | Modifying agent ¹⁾ | X | R1 | Modified group content (mol%) | Melting point (°C) | Ethylene unit content (mol%) | Saponification degree (mol%) | | Type | Content (ppm) | Type | Content (ppm) | Content (ppm) | | |
| Production Example 1 | A1 | 125 | 27 | ≥99.9 | 1 | -CH₂-OH | Single bond | 8 | - | - | - | 10010 | Na | 250 | Ca | 100 | 1500 | B | B |
| Production Example 2 | A2 | 125 | 27 | ≥99.9 | 1 | -CH₂-OH | Single bond | 8 | - | - | - | 10010 | Na | 60 | Ca | 100 | 1500 | A | A |
| Production Example 3 | A3 | 125 | 27 | ≥99.9 | 1 | -CH₂-OH | Single bond | 8 | - | - | - | 10010 | Na | 80 | Ca | 100 | 1500 | A | A |
| Production Example 4 | A4 | 125 | 27 | ≥99.9 | 1 | -CH₂-OH | Single bond | 8 | - | - | - | 10010 | Na | 400 | Ca | 100 | 1500 | C | B |
| Production Example 5 | A5 | 125 | 27 | ≥99.9 | 1 | -CH₂-OH | Single bond | 8 | - | - | - | 10010 | Na | 600 | Ca | 100 | 1500 | C | B |
| Production Example 6 | A6 | 125 | 27 | ≥99.9 | 1 | -CH₂-OH | Single bond | 8 | - | - | - | 10010 | Na | 900 | Ca | 100 | 1500 | D | C |
| Production Example 7 | A7 | 125 | 27 | ≥99.9 | 1 | -CH₂-OH | Single bond | 8 | - | - | - | 10010 | K | 425 | Ca | 100 | 1500 | B | B |
| Production Example 8 | A8 | 125 | 27 | ≥99.9 | 1 | -CH₂-OH | Single bond | 8 | - | - | - | 10010 | Na | 250 | Ca | 5 | 75 | A | A |
| Production Example 9 | A9 | 125 | 27 | ≥99.9 | 1 | -CH₂-OH | Single bond | 8 | - | - | - | 10010 | Na | 250 | Ca | 15 | 225 | A | A |
| Production Example 10 | A10 | 125 | 27 | ≥99.9 | 1 | -CH₂-OH | Single bond | 8 | - | - | - | 10010 | Na | 250 | Ca | 25 | 375 | A | A |
| Production Example 11 | A11 | 125 | 27 | ≥99.9 | 1 | -CH₂-OH | Single bond | 8 | - | - | - | 10010 | Na | 250 | Ca | 240 | 3599 | C | B |
| Production Example 12 | A12 | 125 | 27 | ≥99.9 | 1 | -CH₂-OH | Single bond | 8 | - | - | - | 10010 | Na | 250 | Ca | 280 | 4199 | D | C |
| Production Example 13 | A13 | 125 | 27 | ≥99.9 | 1 | -CH₂-OH | Single bond | 8 | - | - | - | 10010 | Na | 250 | Ca | 320 | 4799 | D | C |
| Production Example 14 | A14 | 125 | 27 | ≥99.9 | 1 | -CH₂-OH | Single bond | 8 | - | - | - | 10010 | Na | 250 | Mg | 60 | 1460 | B | C |
| Production Example 15 | A15 | 125 | 27 | ≥99.9 | 1 | -CH₂-OH | Single bond | 8 | - | - | - | 10010 | Na | 250 | Zn | 150 | 1450 | B | B |
| Production Example 16 | A16 | 125 | 27 | ≥99.9 | 1 | -CH₂-OH | Single bond | 8 | - | - | - | 10010 | Na | 250 | Ca ²⁾ | 100 | - | C | C |
| Production Example 17 | A17 | 125 | 27 | ≥99.9 | 1 | -CH₂-OH | Single bond | 8 | - | - | - | 10010 | Na | 250 | Ca | 100 | 5000 | B | A |
| Production Example 18 | A18 | 142 | 27 | ≥99.9 | 1 | -CH₂-OH | Single bond | 6 | - | - | - | 10010 | Na | 250 | Ca | 100 | 1500 | B | B |
| Production Example 19 | A19 | 133 | 27 | ≥99.9 | 1 | -CH₂-OH | Single bond | 7 | - | - | - | 10010 | Na | 250 | Ca | 100 | 1500 | B | B |
| Production Example 20 | A20 | 117 | 27 | ≥99.9 | 1 | -CH₂-OH | Single bond | 9 | - | - | - | 10010 | Na | 250 | Ca | 100 | 1500 | B | B |
| Production Example 21 | A21 | 123 | 44 | ≥99.9 | 1 | -CH₂-OH | Single bond | 5 | - | - | - | 10010 | Na | 250 | Ca | 100 | 1500 | A | A |
| Production Example 22 | A22 | 124 | 38 | ≥99.9 | 2 | H | -CH(OH)- | 6 | - | - | - | 10010 | Na | 250 | Ca | 100 | 1500 | B | B |
| Production Example 23 | A23 | 108 | 44 | ≥99.9 | 3 | H | -O-CH(CH₃)- | 5 | - | - | - | 100/0 | Na | 250 | Ca+Zn | 65+35 | 975 | C | B |
| Production Example 24 | A24 | 124 | 69 | ≥99.9 | - | - | - | - | - | - | - | 10010 | Na | 250 | Ca | 100 | 1500 | A | A |
| Production Example 25 | A25 | 101 | 84 | ≥99.9 | - | - | - | - | - | - | - | 100/0 | Na | 250 | Ca | 100 | 1500 | A | A |
| Production Example 26 | A26 | 125 | 27 | 80 | - | - | - | - | - | - | - | 10010 | Na | 250 | Ca | 100 | 1500 | B | B |
| Production Example 27 | A27 | 125 | 44 | 84 | - | - | - | - | - | - | - | 10010 | Na | 250 | Ca | 100 | 1500 | B | B |
| Production Example 28 | A28 | 125 | 27 | ≥99.9 | 1 | -CH₂-OH | Single bond | 8 | 165 | 44 | ≥99.9 | 90/10 | Na | 250 | Ca | 100 | 1500 | B | B |
| Production Example 29 | A29 | 125 | 27 | ≥99.9 | 1 | -CH₂-OH | Single bond | 8 | 165 | 44 | ≥99.9 | 70/30 | Na | 250 | Ca | 100 | 1500 | B | B |
| Production Example 30 | A30 | 125 | 27 | ≥99.9 | 1 | -CH₂-OH | Single bond | 8 | 165 | 44 | ≥99.9 | 60/40 | Na | 250 | Ca | 100 | 1500 | B | B |
| Production Example C1 | AC1 | 125 | 27 | ≥99.9 | 1 | -CH₂-OH | Single bond | 8 | - | - | - | 10010 | Na | 15 | Ca | 100 | 1500 | A | A |
| Production Example C2 | AC2 | 125 | 27 | ≥99.9 | 1 | -CH₂-OH | Single bond | 8 | - | - | - | 10010 | Na | 1600 | Ca | 100 | 1500 | E | C |
| Production Example C3 ³⁾ | AC3 | - | - | - | - | - | - | - | 158 | 27 | ≥99.9 | 0/100 | Na | 250 | Ca | 100 | 1500 | B | B |
| Production Example C4 | AC4 | 125 | 27 | ≥99.9 | 1 | -CH₂-OH | Single bond | 8 | 165 | 44 | ≥99.9 | 40/60 | Na | 250 | Ca | 100 | 1500 | B | B |
| Production Example C5 | AC5 | - | - | - | - | - | - | - | 165 | 44 | ≥99.9 | 0/100 | Na | 250 | Ca | 100 | 1500 | B | B |
| Production Example C6 | AC6 | - | - | - | - | - | - | - | 191 | 27 | ≥99.9 | 0/100 | Na | 250 | Ca | 100 | 1500 | D | C |

| | | | | | | | | | | | | | | | | | | | |
|---|---|---|---|---|---|---|---|---|---|---|---|---|---|---|---|---|---|---|---|
| 1) modifying agent 1: 2-methylene-1,3-propanediol diacetate, modifying agent 2: 3,4-diacetoxy-1 -butene, modifying agent 3: epoxypropane 2) Calcium acetate was used. 3) As a polymer (a'), a modified vinyl alcohol polymer containing 4 mol% of a modifying group represented by Formula (I) (X:-CH₂-OH, R¹: single bond) obtained using modifying agent 1 was used. 4) Type was stearic acid | | | | | | | | | | | | | | | | | | | |

### Example 1

### (1) Production of an unstretched multilayer film

Using the resin composition A1 pellets obtained in Production Example 1, a polyethylene resin (Japan Polypropylene Corporation, "Novatec^{™} LD LJ400"; low-density polyethylene, melting point 108 °C) and a polyethylene adhesive resin (Mitsui Chemicals, Inc., "Admer^{™} NF518"; maleic anhydride graft-modified linear low-density polyethylene adhesive resin, melting point: 120 °C), a 3-material 3-layer unstretched multilayer film (resin composition/polyethylene adhesive resin/polyethylene resin = 18 µm/18 µm/144 µm) was deposited. A thickness of the coextruded film was adjusted by appropriately changing a screw rotation speed and a take-up roll speed.

An extruder and extrusion conditions, and a die used were as follows.

### Resin composition

Extruder: single-screw extruder (TOYO SEIKI Co., Ltd., Labo Machine Model ME CO-EXT)
Screw: diameter 20 mmϕ, L/D20, full-flight screw
Extrusion temperature: supply zone/compression zone/measurement zone/die = 175/200/220/220 °C

### Polyethylene adhesive resin

Extruder: single-screw extruder (TECHNOVEL Corporation, SZW20GT-20MG-STD)
Screw: diameter 20 mmϕ, L/D20, full-flight screw
Extrusion temperature: supply zone/compression zone/measurement zone/die = 175/200/220/220 °C

Polyethylene resin
Extruder: single-screw extruder (Research Laboratory of Plastics Technology Co., Ltd. GT-32-A)
Screw: diameter 32 mmϕ, L/D28, full-flight screw
Extrusion temperature: supply zone/compression zone/measurement zone/die = 175/200/220/220 °C
Die: a coathanger die for a 3-material 3-layer film with a width of 300 mm

### (Research Laboratory of Plastics Technology Co., Ltd.)

Die temperature: 220 °C

### (2) Production of a biaxially stretched multilayer film

The unstretched multilayer film obtained in (1) was stretched three times in a vertical direction and three times in a horizontal direction at 130 °C by a tenter type sequential biaxial stretching facility, to provide a 3-type 3-layer biaxially stretched multilayer film (resin composition/polyethylene adhesive resin/polyethylene resin = 2 µm/2 µm/16 µm).

### (3) Production of a vapor-deposited biaxially stretched multilayer film

On the surface of the resin composition layer of the biaxially stretched multilayer film obtained in (2) was vapor-deposited aluminum metal to a thickness of 50 nm by a known vacuum vapor deposition method to give a metal-vapor deposited biaxially stretched multilayer film (Al/resin composition/polyethylene adhesive resin/polyethylene resin = 50 nm/2 µm/2 µm/16 µm).

### (4) Production of a multilayer structure

On one side of an unstretched polyethylene film (Tohcello, Inc., "T.U.X. HZR-2", melting point: 127 °C, thickness: 50 µm) was applied a two-part adhesive ("Takelac^{™} A-520" and "Takenate^{™} A-50" from Mitsui Chemicals Inc.) and dried to a dry thickness of 2 µm, and laminated with the side of a vapor deposition surface of the vapor-deposited biaxially stretched multilayer film obtained in (3), to provide a multilayer structure (PE/adhesive/Al/resin composition/polyethylene adhesive resin/polyethylene resin = 50 µm/2 µm/50 nm/2 µm/2 µm/16 µm).

### (5) Evaluation of appearance of a multilayer film

Appearance of the biaxially stretched multilayer film obtained in (2) was visually observed and classified in accordance with the following criteria. The results are shown in Table 2.

Classification: criteria
A: uniform appearance with no unevenness
B: moderate unevenness and/or streaks are observed
C: unevenness and/or streaks are observed
D: significant unevenness and/or streaks are observed
E: prominent unevenness and/or streaks are observed, or cracks are observed

### (6) Evaluation of interlayer adhesiveness

The multilayer structure obtained in (4) was humidity-conditions at 23 °C and 50 %RH, and then cut into a sample with a length of 150 mm and a width of 15 mm along an extrusion direction. For the sample, peel strength was determined when it was peeled under an atmosphere of 23 °C and 50 %RH in a T-type peeling mode at a tension rate of 250 mm/min by an autograph "DCS-50M type tensile testing machine" from Shimadzu Corporation, and evaluated in accordance with the following criteria. Here, a peeling interface is an Al/resin composition interface or a resin composition/polyethylene adhesive resin surface. The results are shown in Table 2.

Classification: criteria
A: 250 g/15 mm or more
B: 200 g/15 mm or more and less than 250 g/15 mm
C: 150 g/15 mm or more and less than 200 g/15 mm
D: 100 g/15 mm or more and less than 150 g/15 mm
E: less than 100 g/15 mm

### Examples 2 to 30 and Comparative Examples 1 to 6

Production and evaluation were conducted as described in Example 1, substituting resin compositions A2 to A30 and AC1 to AC6 for resin composition A1. The results are shown in Table 2.

**[Table 2]**

| | Resin composition (A) | Evaluation | |
|---|---|---|---|
| | | Appearance | Interlayer adhesiveness |
| | Type | | |
| Example 1 | A1 | A | B |
| Example 2 | A2 | B | C |
| Example 3 | A3 | A | C |
| Example 4 | A4 | A | A |
| Example 5 | A5 | B | A |
| Example 6 | A6 | C | A |
| Example 7 | A7 | A | A |
| Example 8 | A8 | C | C |
| Example 9 | A9 | B | C |
| Example 10 | A10 | B | B |
| Example 11 | A11 | B | B |
| Example 12 | A12 | B | C |
| Example 13 | A13 | C | C |
| Example 14 | A14 | A | B |
| Example 15 | A15 | B | B |
| Example 16 | A16 | B | A |
| Example 17 | A17 | A | C |
| Example 18 | A18 | D | C |
| Example 19 | A19 | C | B |
| Example 20 | A20 | A | B |
| Example 21 | A21 | A | C |
| Example 22 | A22 | A | B |
| Example 23 | A23 | A | B |
| Example 24 | A24 | A | D |
| Example 25 | A25 | A | D |
| Example 26 | A26 | A | C |
| Example 27 | A27 | A | C |
| Example 28 | A28 | B | B |
| Example 29 | A29 | C | B |
| Example 30 | A30 | D | C |
| Comparative Example 1 | AC1 | C | E |
| Comparative Example 2 | AC2 | E | A |
| Comparative Example 3 | AC3 | E | E |
| Comparative Example 4 | AC4 | E | C |
| Comparative Example 5 | AC5 | E | E |
| Comparative Example 6 | AC6 | E | E |

### Example 31

### (1) Production of a multilayer film

Using the resin composition A1 pellets obtained in Production Example 1, polyethylene resin (Japan Polypropylene Corporation, "Novatec^{™} LD LJ400"; low-density polyethylene, melting point: 108 °C) and a polyethylene adhesive resin (Mitsui Chemicals, Inc., "Admer^{™} NF518"; linear low-density polyethylene adhesive resin, melting point: 120 °C), a process was conducted as described in Example 1, to deposit a 3-material 3-layer unstretched multilayer film (resin composition/polyethylene adhesive resin/polyethylene resin = 2 µm/2 µm/16 µm).

### (2) Light transmittance of a multilayer film

For a multilayer film obtained in (1), a light transmittance at a wavelength of 600 nm was measured using an ultraviolet visible spectrophotometer "UV-2450" manufactured by Shimadzu Corporation, and then classified in accordance with the following criteria. Criteria A and B indicate that the multilayer structure can be suitably used for an application requiring transparency and visibility of the content. Criterion D indicates that the multilayer structure can be suitably used for an application requiring shading performance. The results are shown in Table 3.

Classification: criteria
A: a light transmittance at 600 nm is 90 % or more
B: a light transmittance at 600 nm is 80 % or more and less than 90 %
C: a light transmittance at 600 nm is 10 % or more and less than 80 %
D: a light transmittance at 600 nm is less than 10 %

### (3) Oxygen transmission rate of a multilayer film

For the multilayer film obtained in (1), an oxygen transmission rate was measured where the resin composition layer was an oxygen supply side and the polyethylene resin layer was a carrier gas side in accordance with the method described in JIS K 7126-2 (equal-pressure method; 2006). Specifically, using an oxygen transmission measuring device ("MOCON OX-TRAN2/21" manufactured by Modern Controls Inc.), an oxygen transmission rate (unit: cc/(m²•day•atm)) was measured under the conditions: temperature: 20 °C, humidity of the oxygen supply side: 65 %RH, humidity of the carrier gas side: 65 %RH, oxygen pressure: 1 atm and carrier gas pressure: 1 atm, and classified in accordance with the following criteria. A carrier gas was nitrogen gas containing 2 % by volume of hydrogen gas. The results are shown in Table 3.

Classification: criteria
A: less than 1 cc/(m²•day•atm)
B: 1 cc/(m²•day•atm) or more and less than 5 cc/(m²•day•atm)
C: 5 cc/(m²•day•atm) or more and less than 20 cc/(m²•day•atm)
D: 20 cc/(m²•day•atm) or more and less than 40 cc/(m²•day•atm)
E :40 cc/(m²•day•atm) or more and less than 60 cc/(m²•day•atm)
F: 60 cc/(m²•day•atm) or more and less than 100 cc/(m²•day•atm)
G: 100 cc/(m²•day•atm) or more

### (4) Oxygen transmission rate after bending processing of a multilayer film

The multilayer film obtained in (1) was humidity-conditioned under an atmosphere of 23 °C and 50 %RH, and then was subjected to bending process using Gelvo Flex Tester (Rigaku Kogyo Co., Ltd.). Specifically, first the multilayer film was formed into a cylinder with a diameter of 3.5 inches, whose ends were gripped while it was twisted at the initial 3.5 inches of the stroke by an angle of 440 ° with an initial grip interval of 7 inches, and a grip interval at the maximum bending of 1 inch, and then at 2.5 inches was subjected to straight horizontal movement, and a reciprocating motion consisting of the movement were repeated 10 times at a speed of 40 times/min. For the multilayer film after bending process, an oxygen transmission rate was determined as described in (3), and classified in accordance with the same criteria.

### Example 32

A 3-material 3-layer unstretched multilayer film (resin composition/polyethylene adhesive resin/polyethylene resin = 10 µm/5 µm/5 µm) was deposited as described in Example 31, except that the extrusion conditions were changed, and evaluated as described in Example 31. The results are shown in Table 3.

### Example 33

A 3-material 3-layer unstretched multilayer film (resin composition/polyethylene adhesive resin/polyethylene resin = 8 µm/8 µm/64 µm) was deposited as described in Example 31, except that the extrusion conditions were changed. Next, it was stretched four times in a vertical direction at 130 °C by a tenter type sequential biaxial stretching facility, to produce a 3-material 3-layer uniaxially stretched multilayer film (resin composition/polyethylene adhesive resin/polyethylene resin = 2 µm/2 µm/16 µm), and evaluated as described in Example 31. The results are shown in Table 3.

### Example 34

A 3-material 3-layer unstretched multilayer film (resin composition/polyethylene adhesive resin/polyethylene resin = 32 µm/32 µm/256 µm) was deposited as described in Example 31, except that the extrusion conditions were changed. Next, it was stretched, by a tenter type sequential biaxial stretching facility, four times in a vertical direction at 130 °C and then four times in a horizontal direction, to produce a 3-material 3-layer biaxially stretched multilayer film (resin composition/polyethylene adhesive resin/polyethylene resin = 2 µm/2 µm/16 µm), and evaluated as described in Example 31. The results are shown in Table 3.

### Example 35

By a known vacuum vapor deposition, aluminum metal was vapor-deposited to a thickness of 50 nm on the surface of the resin composition layer of the 3-material 3-layer biaxially stretched multilayer film produced in Example 34, to produce a metal vapor deposited biaxially stretched multilayer film (Al/resin composition/polyethylene adhesive resin/polyethylene resin = 50 nm/2 µm/2 µm/16 µm), and evaluated as described in Example 31. The results are shown in Table 3.

### Example 36

By a known vacuum vapor deposition, an alumina inorganic oxide was vapor-deposited to a thickness of 30 nm on the surface of the resin composition layer of the 3-material 3-layer biaxially stretched multilayer film produced in Example 34, to produce an inorganic oxide vapor deposited biaxially stretched multilayer film (AlOx/resin composition/polyethylene adhesive resin/polyethylene resin = 30 nm/2 µm/2 µm/16 µm), and evaluated as described in Example 31. The results are shown in Table 3.

### Comparative Example 7

Film deposition and biaxial stretching were conducted as described in Example 34, substituting a polypropylene resin (Japan Polypropylene Corporation, "Novatec^{™} PP EA7AD", melting point: 157 °C) for a polyethylene resin and (Mitsui Chemicals, Inc., "Admer^{™} QF500", melting point: 162 °C) for a polyethylene adhesive resin, and during biaxial stretching, the film was broken.

### Comparative Example 8

Film deposition and biaxial stretching were conducted as described in Example 34, except that a resin composition or a polyethylene adhesive resin was not used, to produce a biaxially stretched polyethylene film with a thickness of 20 µm, and evaluated as described in Example 31. The results are shown in Table 3.

### Comparative Example 9

On one side surface of the biaxially stretched polyethylene film produced in Comparative Example 8, aluminum metal was vapor-deposited to a thickness of 50 nm by a known vacuum vapor deposition, to produce a metal vapor deposited biaxially stretched polyethylene film, and evaluated as described in Example 31. The results are shown in Table 3.

**[Table 3]**

| | Multilayer film/Vapor-deposited multilayer film | | | | | | | | | | | | Evaluation | | |
|---|---|---|---|---|---|---|---|---|---|---|---|---|---|---|---|
| | Resin composition (A) | Adhesive resin (B) | Polyolefin resin (C) | Stretching ratio | | Thickness configuration | | | | | Inorganic vapor deposition layer (I) | | Light transmittance | Gas barrier property | |
| | Type | Type | Type | MD direction | TD direction | Layer (X) (µm) | Layer (Y) (µm) | Layer (Z) (µm) | Total thickness (µm) | Layer (X) ratio (%) | Type | Thickness (nm) | | Before bending | After bending |
| Example 31 | A1 | PE | PE | 1 | 1 | 2 | 2 | 16 | 20 | 10.0 | - | - | B | E | E |
| Example 32 | A1 | PE | PE | 1 | 1 | 10 | 5 | 5 | 20 | 50.0 | - | - | B | C | C |
| Example 33 | A1 | PE | PE | 4 | 1 | 2 | 2 | 16 | 20 | 10.0 | - | - | B | D | D |
| Example 34 | A1 | PE | PE | 4 | 4 | 2 | 2 | 16 | 20 | 10.0 | - | - | A | C | C |
| Example 35 | A1 | PE | PE | 4 | 4 | 2 | 2 | 16 | 20 | 10.0 | Al | 50 | D | A | B |
| Example 36 | A1 | PE | PE | 4 | 4 | 2 | 2 | 16 | 20 | 10.0 | AlOx | 30 | A | A | B |
| Comparative Example 7 | A1 | PP | PP | 4 | 4 | 2 | 2 | 16 | 20 | 10.0 | - | - | Broken during stretching | | |
| Comparative Example 8 | - | - | PE | 4 | 4 | 0 | 0 | 20 | 20 | 0.0 | - | - | A | G | G |
| Comparative Example 9 | - | - | PE | 4 | 4 | 0 | 0 | 20 | 20 | 0.0 | Al | 50 | D | E | G |

### Example 37

The multilayer structure obtained in Example 1 (PE/adhesive/Al/resin composition/polyethylene adhesive resin/polyethylene resin = 50 µm/2 µm/50 nm/2 µm/2 µm/16 µm) was crushed into pieces with a size of 5 mm² or less. The crushed product and a polyethylene resin (Japan Polypropylene Corporation, "Novatec^{™} LD LJ400"; low-density polyethylene, melting point: 108 °C) were blended in a mass ratio (crashed product/polyethylene resin) of 40/60, with which single layer deposition was conducted under the conditions described below to provide a recovered composition film with a thickness of 50 µm. A thickness of the film was adjusted by appropriately changing a screw rotation speed and a take-up roll speed. Furthermore, using a polyethylene resin alone, a polyethylene film with a thickness of 50 µm was produced as a control as described above.
Extruder: single-screw extruder from TOYO SEIKI Co., Ltd.
Screw: diameter 20 mmϕ (LID = 20, compaction ratio: 3.5, full-flight screw)
Extrusion temperature: C1/C2/C3/D = 230/230/230/230 °C
Take-up roll temperature: 80 °C

The recovered composition exhibited stable and excellent extrusion processability. Furthermore, the recovered composition film had the substantially same amount of gel and hard spots as the polyethylene film, and had uniform and good appearance except slight coloration.

## Claims

1. A multilayer film having a structure in which a layer (X) is an outermost layer and at least the layer (X), a layer (Y), and a layer (Z) are adjacently laminated in sequence, wherein the layer (X) is made of a resin composition (A) comprising a vinyl alcohol polymer (a) having a melting point of lower than 150 °C as a main component; the layer (Y) comprises an adhesive resin (B) having a melting point of lower than 150 °C as a main component; the layer (Z) comprises a polyolefin resin (C) having a melting point of lower than 150 °C as a main component; and the resin composition (A) comprises alkali metal ions (b) in 25 to 1500 ppm.

2. The multilayer film according to Claim 1, wherein the vinyl alcohol polymer (a) is an ethylene-vinyl alcohol copolymer with an ethylene unit content of 15 to 85 mol%.

3. The multilayer film according to Claim 1 or 2, wherein the vinyl alcohol polymer (a) has a modifying group comprising a primary hydroxy group represented by general formula (I): 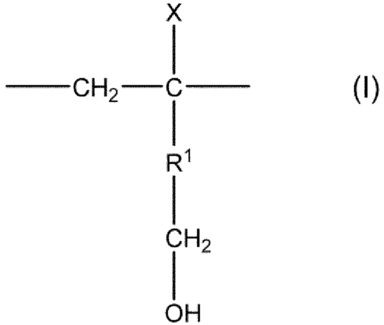 wherein X represents a hydrogen atom, a methyl group or a group represented by R²-OH; R¹ and R² represent independently of each other a single bond, an alkylene group having 1 to 9 carbon atoms or an alkyleneoxy group having 1 to 9 carbon atoms; the alkylene group and the alkyleneoxy group can contain a hydroxy group, an alkoxy group or a halogen atom.

4. The multilayer film according to Claim 3, wherein in general formula (I), R¹ is a single bond, and X is a hydroxymethyl group.

5. The multilayer film according to Claim 3, wherein in general formula (I), R¹ is a hydroxymethylene, and X is a hydrogen atom.

6. The multilayer film according to Claim 3, wherein in general formula (I), R¹ is a methylmethyleneoxy group, and X is a hydrogen atom.

7. The multilayer film according to any one of Claims 3 to 6, wherein in the vinyl alcohol polymer (a), a content of the modifying group containing a primary hydroxy group is 2 mol% or more and less than 20 mol%.

8. The multilayer film according to any one of Claims 1 to 7, wherein the resin composition (A) comprises a vinyl alcohol polymer (a') having a melting point of 150 °C or higher in less than 50 mass%.

9. The multilayer film according to any one of Claims 1 to 8, wherein the resin composition (A) comprises at least one type of multivalent metal ions (c) selected from the group consisting of magnesium ions, calcium ions and zinc ions in 10 to 300 ppm.

10. The multilayer film according to any one of Claims 1 to 9, wherein the resin composition (A) comprises a higher aliphatic carboxylic acid (d) having 8 to 30 carbon atoms in 100 to 4000 ppm.

11. The multilayer film according to any one of Claims 1 to 10, wherein the polyolefin resin (C) comprises a polyethylene resin as a main component.

12. The multilayer film according to any one of Claims 1 to 11, wherein a thickness of the layer (X) is 0.2 µm or more and less than 20 µm, and a ratio of a thickness of the layer (X) to the total thickness of all layers of the multilayer film is less than 25 %.

13. The multilayer film according to any one of Claims 1 to 12, wherein the multilayer film is stretched at least uniaxially by 3 times or more and less than 12 times.

14. The multilayer film according to any one of Claims 1 to 13, wherein the multilayer film is stretched biaxially 3 times or more and less than 12 times in a respective direction.

15. A vapor deposition multilayer film, comprising the multilayer film according to any one of Claims 1 to 14 having an inorganic vapor deposition layer (I) on an exposed surface side of the layer (X).

16. The multilayer film or the vapor deposition multilayer film according to any one of Claims 1 to 15, wherein an oxygen transmission rate (under the conditions of 20 °C and 65 %RH) as determined in accordance with the method described in JIS K 7126-2 (equal-pressure method; 2006) is less than 60 cc/(m²•day•atm).

17. The multilayer film or the vapor deposition multilayer film according to any one of Claims 1 to 16, wherein a light transmittance at a wavelength of 600 nm is 80 % or more.

18. A multilayer structure, which is a laminate of the multilayer film or the vapor deposition multilayer film according to any one of Claims 1 to 17, and at least one resin layer (R) comprising a thermoplastic resin (D) as a main component.

19. The multilayer structure according to Claim 18, wherein the thermoplastic resin (D) comprises a polyolefin resin having a melting point of lower than 150 °C as a main component.

20. The multilayer structure according to Claim 18 or 19, wherein both polyolefin resin (C) and thermoplastic resin (D) comprise a polyethylene resin as a main component.

21. The multilayer structure according to any one of Claims 18 to 20, wherein at least one of the layer (Z) and the resin layer (R) comprises a polyethylene resin as a main component, and a ratio of the total thickness of a layer or layers comprising a polyethylene resin as a main component to the total thickness of the multilayer structure is 0.75 or more.

22. The multilayer structure according to any one of Claims 18 to 21, wherein a layer comprising a resin having a melting point of 240 °C or higher as a main component and a metal layer with a thickness of 1 µm or more are absent.

23. A packaging material comprising the multilayer structure according to any one of Claims 18 to 22.

24. A recovered composition comprising a recovered material of the multilayer structure according to any one of Claims 18 to 22.

25. A method for recovering a multilayer structure comprising crushing the multilayer structure according to any one of Claims 18 to 22 and then melt-molding the crushed material.
